(19) Europäisches Patentamt
European Patent Office
Office européen des brevets

(11) **EP 4 429 374 A1**

(12) **EUROPEAN PATENT APPLICATION**
published in accordance with Art. 153(4) EPC

(43) Date of publication:
**11.09.2024 Bulletin 2024/37**

(51) International Patent Classification (IPC):
**H04W 72/04** (2023.01)    **H04L 5/00** (2006.01)

(21) Application number: **22939349.1**

(52) Cooperative Patent Classification (CPC):
**H04L 5/00; H04W 72/04**

(22) Date of filing: **29.04.2022**

(86) International application number:
**PCT/CN2022/090611**

(87) International publication number:
**WO 2023/206502 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **New H3C Technologies Co., Ltd.
Hangzhou, Zhejiang 310052 (CN)**

(72) Inventor: **KONG, Lei
Beijing 100102 (CN)**

(74) Representative: **Grünecker Patent- und Rechtsanwälte
PartG mbB
Leopoldstraße 4
80802 München (DE)**

(54) **TDD FRAME STRUCTURE CONFIGURATION METHOD AND APPARATUS, AND DEVICE**

(57)    The present invention provides a method, an apparatus and a device for configuring a TDD frame structure. The method includes: determining an operation mode of a BS, where the operation mode is either an FD-enabled mode or an FD-disabled mode, and where an F symbol in a slot is allowed to be used as FD, DL, UL or a GP in the FD-enabled mode, and to be used as the DL, the UL or the GP in the FD-disabled mode; and transmitting FD mode enable indication information to UE for enabling an FD mode for the UE based on the FD mode enable indication information in the FD-enabled mode; where in the FD-enabled mode, UL data and DL data are capable of being simultaneously processed on a time-domain resource related to the F symbol in the slot when the F symbol is used as the FD. According to the technical solutions of the present invention, it is achieved to improve resource utilization.

Determine an operation mode of the BS, where the operation mode is either an FD-enabled mode or an FD-disabled mode, and an F symbol in a slot is allowed to be used as FD, DL, UL or a GP in the FD-enabled mode, and to be used as the DL, the UL or the GP in the FD-disabled mode — 201

In the FD-enabled mode, transmit FD mode enable indication information to UE for enabling an FD mode for the UE based on the FD mode enable indication information — 202

In the FD-enabled mode, UL data and DL data are capable of being simultaneously processed on a time-domain resource related to the F symbol in the slot when the F symbol is used as the FD — 203

FIG. 2

**Description**

**TECHNICAL FIELD**

The present invention relates to the field of communications and, in particular, to a method, an apparatus and a device for configuring a TDD frame structure.

**BACKGROUND**

Time division duplex (TDD) systems are widely applied in mobile communication systems, such as 5G systems. In the TDD systems, a frame structure is divided into downlink (DL) slots, uplink (UL) slots, and special (S) slots. The DL slot includes a plurality of DL symbols, and DL data is processed on time-domain resources related to the DL symbols. The UL slot includes a plurality of UL symbols, and UL data is processed on time-domain resources related to the UL symbols. The S slot includes at least one flexible (F) symbol. The F symbol may be used as DL, which means that the DL data is processed at a time-domain resource related to the F symbol. The F symbol may also be used as UL, which means that the UL data is processed at the time-domain resource related to the F symbol. The F symbol may also be used as a guard period (GP), which means that a UL-DL switching protection is processed at the time-domain resource related to the F symbol. The TDD systems usually work in a half duplex (HD) mode, in which the same time-domain resource can only be used as either UL or DL at the same time.

**SUMMARY**

The present invention provides a method of configuring a TDD frame structure, which is applicable to a base station (BS) and includes:

determining an operation mode of the BS, where the operation mode is either a full duplex (FD)-enabled mode or an FD-disabled mode, and where a flexible (F) symbol in a slot is allowed to be used as FD, downlink (DL), uplink (UL) or a guard period (GP) in the FD-enabled mode, and to be used as the DL, the UL or the GP in the FD-disabled mode; and

transmitting, in the FD-enabled mode, FD mode enable indication information to user equipment (UE) for enabling an FD mode for the UE based on the FD mode enable indication information;

where in the FD-enabled mode, UL data and DL data are capable of being simultaneously processed on a time-domain resource related to the F symbol in the slot used as the FD.

The present invention provides a method of configuring a TDD frame structure, which is applicable to UE that supports an FD mode and includes: receiving FD mode enable indication information from a BS, where the BS in an FD-enabled mode transmits the FD mode enable indication information to the UE; and

enabling an FD mode for the UE based on the FD mode enable indication information;

where after enabling the FD mode for the UE, an F symbol in a slot is expected by the UE to be used as FD, DL, UL, or a GP; and

where after enabling the FD mode for the UE, UL data and DL data are capable of being simultaneously processed on a time-domain resource related to the F symbol in the slot when the F symbol is used as the FD.

The present invention provides a method of configuring a TDD frame structure, which is applicable to UE that does not support an FD mode and includes: receiving FD mode enable indication information from a BS, where the BS in an FD-enabled mode transmits the FD mode enable indication information to the UE; and ignoring the FD mode enable indication information; where an F symbol in a slot is expected by the UE to be used as DL, UL, or a GP; where DL data is processed on a time-domain resource related to the F symbol in the slot when the F symbol is used as the DL; and where UL data is processed on the time-domain resource related to the F symbol in the slot when the F symbol is used as the UL.

The present invention provides an apparatus for configuring a TDD frame structure, which is applicable to a BS and includes: a determining module, configured to determine an operation mode of the BS, where the operation mode is either an FD-enabled mode or an FD-disabled mode, and where an F symbol in a slot is allowed to be used as FD, DL, UL or a GP in the FD-enabled mode, and to be used as the DL, the UL or the GP in the FD-disabled mode; a transmitting module, configured to in the FD-enabled mode, transmit FD mode enable indication information to UE for enabling an FD mode for the UE based on the FD mode enable indication information; and a processing module, configured to be capable of processing UL data and DL data simultaneously on a time-domain resource related to the F symbol in the slot when the F symbol is used as the FD in the FD-enabled mode.

The present invention provides an apparatus for configuring a TDD frame structure, which is applicable to UE that supports an FD mode, and which includes: a receiving module, configured to receive FD mode enable indication information from a BS, where the BS in an FD-enabled mode transmits the FD mode enable indication information to the UE; an enabling module, configured to enable an FD mode for the UE based on the FD mode enable indication information, where after enabling the FD mode for the UE, an F symbol in a slot is expected by the UE to be used as FD, DL, UL, or a GP; and a processing module, configured to be capable of processing UL data and DL data simultaneously on a time-domain resource related to the F symbol in the slot when the F symbol is used as the FD after the FD mode is enabled for the UE.

The present invention provides an apparatus for configuring a TDD frame structure, which is applicable to UE that does not support an FD mode, and which includes: a receiving module, configured to receive FD mode enable indication information from a BS, where the BS in an FD-enabled mode transmits the FD mode enable indication information to the UE; an enabling module, configured to ignore the FD mode enable indication information, where an F symbol in a slot is expected by the UE to be used as DL, UL, or a GP; and a processing module, configured to process DL data on a time-domain resource related to the F symbol in the slot when the F symbol is used as the DL, and process UL data on the time-domain resource related to the F symbol in the slot when the F symbol is used as the UL.

The present invention provides an electronic device, which includes: one or more processors and one or more machine-readable storage media, where the one or more machine-readable storage media store machine-executable instructions capable of being executed by the one or more processors, and the one or more processors are configured to execute the machine-executable instructions to implement the methods of configuring a TDD frame structure disclosed in the above examples of the present invention.

According to the above technical solutions, it can be seen that an operation mode of a BS may be classified into an FD-enabled mode and an FD-disabled mode. In the FD-enabled mode, an F symbol in a slot is allowed to be used as FD, that is, the function of the F symbol is extended to act as an FD symbol, so that UL data and DL data are capable of being simultaneously processed on a time-domain resource related to the F symbol in the slot when the F symbol is used as the FD. Therefore, the UL data and the DL data can be simultaneously processed on the same time-domain resource, thereby utilizing time-domain resources more effectively, improving resource utilization, increasing a network coverage and a network capacity, and meanwhile reducing a transmission delay, for example, reducing a UL transmission delay.

## BRIEF DESCRIPTION OF THE DRAWINGS

FIG. 1 illustrates a schematic diagram of a frame structure according to one example of the present invention.
FIG. 2 illustrates a schematic flowchart of a method of configuring a TDD frame structure according to one example of the present invention.
FIG. 3 illustrates a schematic flowchart of a method of configuring a TDD frame structure according to one example of the present invention.
FIG. 4 illustrates a schematic flowchart of a method of configuring a TDD frame structure according to one example of the present invention.
FIG. 5 illustrates effective time of an FD mode according to one example of the present invention.
FIG. 6 illustrates a schematic diagram of a frame structure according to one example of the present invention.
FIG. 7 illustrates a schematic diagram of a frame structure according to one example of the present invention.
FIG. 8A illustrates a schematic structure diagram of a BS according to one example of the present invention.
FIG. 8B and FIG. 8C illustrate schematic structure diagrams of UE according to one example of the present invention.

## DETAILED DESCRIPTION OF THE EMBODIMENTS

The terms used in examples of the present invention are intended to describe the particular examples only, and not to limit the present invention. The terms described with "a", "the" and "said" in their singular forms in the present invention and the appended claims are also intended to include their plural forms, unless clearly indicated otherwise in the context. It should also be understood that the term "and/or" as used herein includes any and all possible combinations of one or more of the associated listed items.

It is to be understood that, although terms "first", "second", "third", and the like may be used in the present invention to describe various information, such information should not be limited to these terms. These terms are only used to distinguish information of the same category with each other. For example, without departing from the scope of the present invention, first information may be referred as second information; and similarly, second information may also be referred as first information. In addition, depending on the context, the word "if' as used herein may be interpreted as "when", "upon", or "in response to determining".

In time division duplex (TDD) systems, a frame structure is divided into downlink (DL) slots, uplink (UL) slots, and special (S) slots. The DL slot includes a plurality of DL symbols and DL data is processed on time-domain resources related to the DL symbols. The UL slot includes a plurality of UL symbols and UL data is processed on time-domain resources related to the UL symbols. The S slot includes at least one flexible (F) symbol, and the F symbol may be used as DL, as UL, and also as a guard period (GP). At present, the TDD systems work in a half duplex (HD) mode, which means that the same time-domain resource can only be used as either UL or DL at the same time.

In order to utilize the time-domain resources more flexibly and to improve resource utilization, it is expected for the TDD systems to configure the same time-domain resource for both UL and DL at the same time. That is, both the UL data and the DL data can be simultaneously processed on the same time-domain resource, i.e., a full duplex (FD) mode.

For the TDD systems, once the frame structure is determined, UE can transmit and receive data in accordance with the frame structure. The frame structure is divided into the DL slots, the UL slots and the S slots. In the FD mode, the frame structure may be obtained by a base station (BS) and the UE. The BS schedules the UE adopting the HD mode for either transmitting or receiving in accordance with the frame structure. The BS schedules the UE adopting the FD mode for transmitting, receiving, or transmitting and receiving simultaneously in accordance with the frame structure.

As described above, the BS may configure the frame structure for the FD mode and inform the UE about the frame structure for the FD mode, so that the UE may learn the current frame structure, thereby transmitting and receiving the data correctly. From another point of view, after learning the frame structure for the FD mode, the UE may also learn that there may be a current interference between UE, so as to take some interference cancellation techniques to mitigate the interference caused by other UE, thereby improving a communication reliability.

A method of configuring a TDD frame structure is provided in one example of the present invention to support the FD mode in the TDD systems. The frame structure configured for the FD mode indicates UL resources, DL resources, and FD resources. Such a frame structure includes DL slots, UL slots and S slots. The DL slot may include a plurality of DL symbols and DL data is processed on time-domain resources related to the DL symbols. The UL slot may include a plurality of UL symbols and UL data is processed on time-domain resources related to the UL symbols. The S slot may include at least one F symbol, and the F symbol may be used as FD, as DL, and as UL, and may also be used as a GP. When the F symbol is used as the FD, it means that the F symbol is used for both the UL data and the DL data and both the UL data and the DL data may be simultaneously processed on the F symbol. When the F symbol is used as the DL, it means that the F symbol is used for the DL data and the DL data may be processed on the F symbol. When the F symbol is used as the UL, it means that the F symbol is used for the UL data and the UL data may be processed on the F symbol. When being used as the GP, the F symbol acts as protection time for a UL/DL switching.

In one example, when the F symbol is used as the FD, a part of frequency-domain resources of the FD may be used for the UL, another part of the frequency-domain resources may be used for the DL, and a middle part of the frequency-domain resources may be acted as a UL-DL protection gap, so as to prevent from generating an inter sub-band interference.

The following solutions are described first.

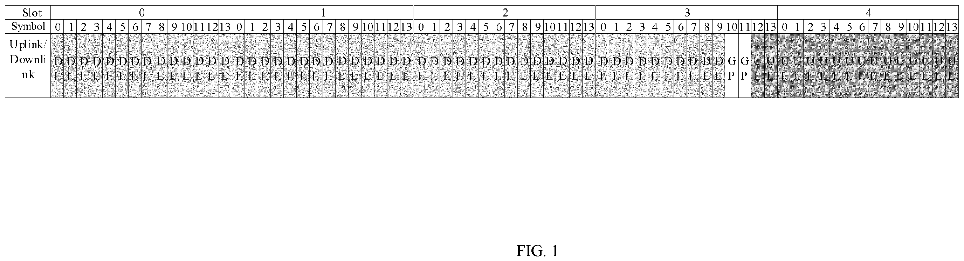

1. Now, in a 5G system, a TDD frame structure is divided into UL slots, DL slots, and S slots. An F symbol, which is included in an S slot, may be used as UL, DL or a GP. The frame structure may be informed to user equipment (UE) via a UL-DL common configuration (TDD-UL-DL-ConfigCommon) or a UL-DL dedicated configuration (TDD-UL-DL-ConfigDedicated). For the TDD-UL-DL-ConfigCommon, there may be up to two frame structure patterns to be configured. In each pattern, it may configure a period of the frame structure, each slot in the period, and each symbol (a DL symbol, a UL symbol, or an F symbol) in the period, so as to determine the frame structure. One example of the frame structure may be illustrated in FIG. 1, in which a UL/DL ratio is 1:4, slot 3 acts as the S slot, and symbols #10 and #11 are configured as F symbols for the GP of a UL/DL switching.

For the TDD-UL-DL-ConfigDedicated, the symbols that are configured as the F symbols via the TDD-UL-DL-ConfigCommon may be changed and configured as the DL symbols or the UL symbols.

2. In the 5G system, the configuration of the TDD frame structure may be completed by means of slot format indicators (SFIs). Firstly, a plurality of slot format combinations (SFCs) are defined via the SFI in high-level signaling. For example, the BS may select the slot formats that meet service requirements and add these slot formats into one SFC.

Some of these slot formats may be shown in Table 1, in which D means the DL symbol, U means the UL symbol, and F means the F symbol. For each of the SFCs, it is identified by a fixed identification (ID) and includes one or more types of slot format. After configuring the SFI, the BS transmits the plurality of SFCs to the UE through radio resource control (RRC) signaling.

Table 1

| Index of slot format | Symbols in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ...... | ...... | | | | | | | | | | | | | |
| 55 | D | D | F | F | F | U | U | U | D | D | D | D | D | D |
| 56 - 254 | Reserved | | | | | | | | | | | | | |
| 255 | The slot format is determined by the UE according to TDD-UL-DL-ConfigurationCommon, TDD-UL-DL-ConfigurationDedicated and DL control information (DCI) format. | | | | | | | | | | | | | |

Secondly, after configuring the plurality of SFCs through the RRC signaling, the BS may inform the UE of the index of the SFC, which is currently used, via DCI format 2_0 through a periodic physical DL control channel (PDCCH). An information structure of DCI format 2_0 is partly shown below.

*The following information is transmitted by means of the DCI format 2_0 with*

*CRC (cyclic redundancy check) scrambled by SFI-RNTI (radio network temporary identifier):*

*If the higher layer parameter slotFormatCombToAddModList is configured,*

*Slot format indicator 1, Slot format indicator 2, ..., Slot format indicator N,*

*......*

After receiving the information of DCI format 2_0 correctly, the UE determines the slot format of each slot in a certain period according to the index value of the indicated SFC. Thus, the BS and the UE complete the configuration of the frame structure by the dynamic indications, so that a normal UL/DL data transmission can be performed.

The technical solutions of the present invention are described below in conjunction with examples.

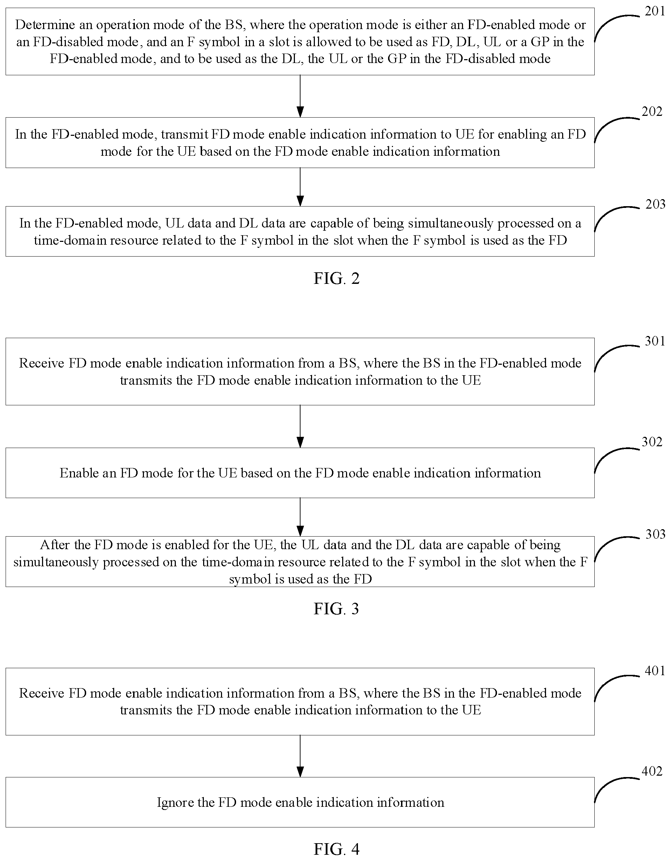

A method of configuring a TDD frame structure is provided in one example of the present invention and may be applied to a BS. As illustrated in FIG. 2 that is a schematic flowchart of the method of configuring a TDD frame structure, the method may include the following steps.

At step 201, an operation mode of the BS is determined. The operation mode is either an FD-enabled mode or an FD-disabled mode. An F symbol in a slot is allowed to be used as FD, DL, UL or a GP in the FD-enabled mode, and to be used as the DL, the UL or the GP in the FD-disabled mode.

At step 202, in the FD-enabled mode, FD mode enable indication information is transmitted to UE for enabling an FD mode for the UE based on the FD mode enable indication information.

At step 203, in the FD-enabled mode, UL data and DL data are capable of being simultaneously processed on a time-domain resource related to the F symbol in the slot when the F symbol is used as the FD.

In one example, transmitting the FD mode enable indication information to the UE may include: transmitting a system broadcast message to the UE. The system broadcast message carries the FD mode enable indication information.

If the system broadcast message is a master information block (MIB) message, the FD mode enable indication information is indicated via a spare field of the MIB message. Alternatively, the MIB message includes an FD enabled field, and the FD mode enable indication information is indicated via the FD enabled field of the MIB message. When the MIB message carries the FD mode enable indication information, effective time of enabling the FD mode may include, but is not limited to: a slot next to a slot at which the MIB message is transmitted; or the M-th slot after the slot at which the MIB message is transmitted, where the M is a fixed value agreed between the BS and the UE, and the M is a positive integer; or the first slot of a frame next to a frame in which the MIB message is transmitted; or the first slot of a period next to a period in which the MIB message is transmitted.

If the system broadcast message is a system information block (SIB) message, the FD mode enable indication information is indicated via a UL-DL common configuration message of the SIB message. Alternatively, the SIB message includes an FD enabled field, and the FD mode enable indication information is indicated via the FD enabled field of the SIB message. When the SIB message carries the FD mode enable indication information, effective time of enabling the FD mode may include, but is not limited to: a slot next to a slot at which the SIB message is transmitted; or the M-th slot after the slot at which the SIB message is transmitted, where the M is a fixed value agreed between the BS and the UE, and the M is a positive integer; or the first slot of a frame next to a frame in which the SIB message is transmitted; or the first slot of a period next to a period in which the SIB message is transmitted.

In one example, transmitting the FD mode enable indication information to the UE may include: transmitting an RRC reconfiguration message to the UE, where the RRC reconfiguration message carries the FD mode enable indication information.

If the RRC reconfiguration message carries the FD mode enable indication information, the RRC reconfiguration message may include an FD enabled field and the FD mode enable indication information is indicated via the FD enabled field of the RRC reconfiguration message. When the RRC reconfiguration message carries the FD mode enable indication information, effective time of enabling the FD mode may include, but is not limited to: a slot next to a slot at which an RRC reconfiguration completion message corresponding to the RRC reconfiguration message is received; or the M-th slot after the slot at which the RRC reconfiguration completion message corresponding to the RRC reconfiguration message is received, where the M is a fixed value agreed between the BS and the UE, and the M is a positive integer.

Before step 203, it may also determine a target frame structure, and transmit an UL-DL common configuration message to the UE. The UL-DL common configuration message includes one or more frame structure parameters corresponding to the target frame structure, so that the UE determines the target frame structure based on the one or more frame structure parameters. The target frame structure may include a plurality of slots, each of the slots includes a plurality of symbols, and the symbol is the F symbol, a DL symbol or a UL symbol. And, it performs a data processing based on the target frame structure. With respect to step 203, the UL data and the DL data are capable of being simultaneously processed on the time-domain resource related to the F symbol in the slot when the data processing is processed based on the target frame structure and the F symbol is used as the FD. The DL data is processed on the time-domain resource related to the F symbol in the slot when the F symbol is used as the DL. The UL data is processed on the time-domain resource related to the F symbol in the slot when the F symbol is used as the UL.

In one example, transmitting the FD mode enable indication information to the UE may include: transmitting a slot format indication message (which is, for example, carried by RRC signaling) to the UE, where the slot format indication message carries the FD mode enable indication information. In particular, that the slot format indication message carries the FD mode enable indication information may include: the slot format indication message carries the FD mode enable indication information if the slot format indication message includes an FD slot format combination field.

One or more combination identifiers, each of which corresponds to a combination of at least one slot format, are carried via the FD slot format combination field if the slot format indication message includes the FD slot format combination field. After transmitting the slot format indication message to the UE, a target slot format combination may be determined, and the combination identifier corresponding to the target slot format combination is transmitted to the UE via a DCI message, so that the UE determines the target slot format combination based on the combination identifier corresponding to the target slot format combination.

When the slot format indication message carries the FD mode enable indication information, effective time of enabling the FD mode may include, but is not limited to: a slot at which the DCI message is transmitted.

Before step 203, it may also determine a target frame structure based on the target slot format combination. The target frame structure may include a plurality of slots, each of the slots includes a plurality of symbols, and the symbol is the F symbol, the DL symbol or the UL symbol. Further, it may also perform a data processing based on the target frame structure. With respect to step 203, the UL data and the DL data are capable of being simultaneously processed on the time-domain resource related to the F symbol in the slot when the data processing is processed based on the target frame structure and the F symbol is used as the FD. The DL data is processed on the time-domain resource related to the F symbol in the slot when the F symbol is used as the DL. The UL data is processed on the time-domain resource related to the F symbol in the slot when the F symbol is used as the UL.

A method of configuring a TDD frame structure is provided in one example of the present invention and may be applied to UE that supports an FD mode. As illustrated in FIG. 3 that is a schematic flowchart of the method of configuring a TDD frame structure, the method may include the following steps.

At step 301, FD mode enable indication information is received from a BS. The BS in the FD-enabled mode transmits the FD mode enable indication information to the UE.

At step 302, an FD mode is enabled for the UE based on the FD mode enable indication information.

After the FD mode is enabled for the UE, an F symbol in a slot is expected by the UE to be used as FD, DL, UL, or a GP. If the FD mode is not enabled for the UE, the F symbol in the slot is expected by the UE to be used as the DL, the UL, or the GP. DL data is processed on a time-domain resource related to the F symbol in the slot when the F symbol is used as the DL; and UL data is processed on the time-domain resource related to the F symbol in the slot when the F symbol is used as the UL.

At step 303, after enabling the FD mode for the UE, the UL data and the DL data are capable of being simultaneously processed on the time-domain resource related to the F symbol in the slot when the F symbol is used as the FD.

In one example, receiving the FD mode enable indication information from the BS may include: receiving a system broadcast message from the BS, where the system broadcast message carries the FD mode enable indication information.

If the system broadcast message is an MIB message, the FD mode enable indication information may be indicated via a spare field of the MIB message. Alternatively, the MIB message may include an FD enabled field, and the FD mode enable indication information may be indicated via the FD enabled field of the MIB message. In addition, when the MIB message carries the FD mode enable indication information, effective time of the UE enabling the FD mode may include, but is not limited to: a slot next to a slot at which the MIB message is received; or the M-th slot after the slot at which the MIB message is received, where the M is a fixed value agreed between the BS and the UE, and the M is a positive integer; or the first slot of a frame next to a frame in which the MIB message is received; or the first slot of a period next to a period in which the MIB message is received.

If the system broadcast message is an SIB message, the FD mode enable indication information may be indicated via a UL-DL common configuration message of the SIB message. Alternatively, the SIB message may include an FD enabled field, and the FD mode enable indication information may be indicated via the FD enabled field of the SIB message. In addition, when the SIB message carries the FD mode enable indication information, effective time of the UE enabling the FD mode may include, but is not limited to: a slot next to a slot at which the SIB message is received; or the M-th slot after the slot at which the SIB message is received, where the M is a fixed value agreed between the BS and the UE, and the M is a positive integer; or the first slot of a frame next to a frame in which the SIB message is received; or the first slot of a period next to a period in which the SIB message is received.

In one example, receiving the FD mode enable indication information from the BS may include: receiving an RRC reconfiguration message from the BS, where the RRC reconfiguration message carries the FD mode indication information.

If the RRC reconfiguration message carries the FD mode enable indication information, the RRC reconfiguration message may include an FD enabled field and the FD mode enable indication information may be indicated via the FD enabled field of the RRC reconfiguration message. When the RRC reconfiguration message carries the FD mode enable indication information, effective time of the UE enabling the FD mode may include, but is not limited to: a slot next to a slot at which an RRC reconfiguration completion message corresponding to the RRC reconfiguration message is transmitted; or the M-th slot after the slot at which the RRC reconfiguration completion message corresponding to the RRC reconfiguration message is transmitted, where the M is a fixed value agreed between the BS and the UE, and the M is a positive integer.

Before step 303, it may receive an UL-DL common configuration message from the BS, where the UL-DL common configuration message includes one or more frame structure parameters corresponding to a target frame structure. It also may determine the target frame structure based on the one or more frame structure parameters, where the target frame structure includes a plurality of slots, each of the slots includes a plurality of symbols, and the symbol is the F symbol, a DL symbol or a UL symbol. It also may perform a data processing based on the target frame structure.

With respect to step 303, the UL data and the DL data are capable of being simultaneously processed on the time-domain resource related to the F symbol in the slot when the data processing is processed based on the target frame structure and the F symbol is used as the FD. The DL data is processed on the time-domain resource related to the F symbol in the slot when the F symbol is used as the DL. The UL data is processed on the time-domain resource related to the F symbol in the slot when the F symbol is used as the UL.

In one example, receiving the FD mode enable indication information from the BS may include: receiving a slot format indication message (which is, for example, carried by RRC signaling) from the BS, where the slot format indication message carries the FD mode enable indication information. In particular, that the slot format indication message carries the FD mode enable indication information may include: the slot format indication message carries the FD mode enable indication information if the slot format indication message includes an FD slot format combination field.

One or more combination identifiers, each of which corresponds to a combination of at least one slot format, are parsed from the FD slot format combination field if the slot format indication message includes the FD slot format combination field. After receiving the slot format indication message from the BS, the UE may also receive a DCI message from the BS. And, the UE may parse the DCI message to obtain the combination identifier corresponding to a target slot format combination, and determine the target slot format combination based on the combination identifier corresponding to the target slot format combination.

When the slot format indication message carries the FD mode enable indication information, effective time of enabling the FD mode for the UE may include: a slot at which the DCI message is transmitted.

Before step 303, it may also determine a target frame structure based on the target slot format combination. The target frame structure may include a plurality of slots, each of the slots includes a plurality of symbols, and the symbol is the F symbol, the DL symbol or the UL symbol. Further, it may also perform a data processing based on the target frame structure. With respect to step 303, the UL data and the DL data are capable of being simultaneously processed on the time-domain resource related to the F symbol in the slot when the data processing is performed based on the target frame structure and the F symbol is used as the FD. The DL data is processed on the time-domain resource related to the F symbol in the slot when the F symbol is used as the DL. The UL data is processed on the time-domain resource related to the F symbol in the slot when the F symbol is used as the UL.

A method of configuring a TDD frame structure is provided in one example of the present invention and may be applied to UE that does not support an FD mode. As illustrated in FIG. 4 that is a schematic flowchart of the method of configuring a TDD frame structure, the method may include the following steps.

At step 401, FD mode enable indication information is received from a BS. The BS in the FD-enabled mode transmits the FD mode enable indication information to the UE.

At step 402, the FD mode enable indication information is ignored. That is, it does not enable the FD mode for the UE based on the FD mode enable indication information. An F symbol in a slot is expected by the UE to be used as DL, UL, or a GP. DL data is processed on a time-domain resource related to the F symbol in the slot when the F symbol is used as the DL; and UL data is processed on the time-domain resource related to the F symbol in the slot when the F symbol is used as the UL.

According to the above technical solutions, it can be seen that an operation mode of a BS may be classified into an FD-enabled mode and an FD-disabled mode. In the FD-enabled mode, an F symbol in a slot is allowed to be used as FD, that is, the function of the F symbol is extended to act as an FD symbol, so that UL data and DL data are capable of being simultaneously processed on a time-domain resource related to the F symbol in the slot when the F symbol is used as the FD. Therefore, the UL data and the DL data can be simultaneously processed on the same time-domain resource, thereby utilizing time-domain resources more effectively, improving resource utilization, increasing a network coverage and a network capacity, and reducing a transmission delay, for example, reducing a UL transmission delay.

The above technical solutions of the present invention are described in conjunction with one example below.

This example provides a method of configuring a TDD frame structure, which makes the frame structure applicable to an FD mode on the basis of being compatible with a TDD system. A new frame structure is used as the FD mode in this example. The frame structure may include a plurality of slots, each of the slots includes a plurality of symbols, and the symbol may be an F symbol, a DL symbol, and a UL symbol. A BS and UE process DL data on time-domain resources related to the DL symbols and process UL data on time-domain resources related to the UL symbols.

If the FD mode is enabled for the BS, i.e., the BS is allowed to process the UL data and the DL data simultaneously, the F symbol is used as FD, DL, UL, or a GP. The UL data and the DL data may be simultaneously processed when the F symbol is used as the FD, the DL data may be processed when the F symbol is used as the DL, the UL data may be processed when the F symbol is used as the UL, and the F symbol may act as a UL-DL switching protection when it is used as the GP. If the FD mode is disabled for the BS, i.e., the BS is not allowed to process the UL data and the DL data simultaneously, the F symbol is used as the DL, the UL, or the GP. The DL data may be processed when the F symbol is used as the DL, the UL data may be processed when the F symbol is used as the UL, and the F symbol may act as the UL-DL switching protection when it is used as the GP.

What makes the F symbol used as the GP is to achieve the UL-DL switching protection in the frame structure of a TDD system by the GP symbol. However, since separate antennas and RF circuits are used for transmission and reception when the BS operates in the FD mode, the GP symbol is unnecessary to achieve the UL-DL switching protection. The UE in the FD mode operates similarly as the BS, and thus the GP symbol is also unnecessary to achieve the UL-DL switching protection. The UE in an HD mode requires sufficient time for a switching between transmitting RF and receiving RF, that is, the GP symbol is used to achieve the UL-DL switching protection. In view of the above, in order to support the UE in the HD mode, the GP symbol is still preserved in the frame structure for the FD mode. Therefore, the F symbol is allowed to be used as the GP.

In this example, the method of configuring a TDD frame structure may include the following steps.

At step S11, the BS determines an operation mode corresponding to itself, either an FD-enabled mode or an FD-disabled mode. For example, the operation mode may be used as the BS according to service requirements, whose procedure is not limited. When the BS is in the FD-enabled mode, a symbol in a slot is allowed to act as the F symbol, the DL symbol, or the UL symbol, and the F symbol in the slot is allowed to be used as the FD, the DL, the UL or the GP. When the BS is in the FD-disabled mode, the symbol in the slot is allowed to act as the F symbol, the DL symbol, or the UL symbol, and the F symbol in the slot is allowed to be used as the DL, the UL and the GP.

At step S12, the BS in the FD-enabled mode transmits the UE an MIB message that includes FD mode enable indication information. Alternatively, the BS in the FD-disabled mode does not transmit the FD mode enable indication information to the UE via the MIB message.

When a system broadcast is used, the FD mode enable indication information may be carried via the MIB message. That is, the FD mode enable indication information may be broadcast via the MIB message.

For example, the FD mode enable indication information may be indicated by a spare field of the MIB message.

That is, the spare field of the MIB message may be set to a preset value (which may be configured on the basis of experience). The FD mode enable indication information is indicated when the spare field has the preset value.

For the case where the FD mode enable indication information is indicated by the spare field, one example of the MIB message may be:

$$MIB ::= SEQUENCE \{$$

$$...$$

$$spare\ BIT\ STRING\ (SIZE\ (1))$$

$$\}$$

In the above MIB message, *spare* is the spare field, and the value of the spare field is SIZE (1), which means the FD mode enable indication information. Of course, it is just an example of the spare field.

As another example, it may additionally add an FD enabled field into the MIB message, and FD mode enable indication information may be indicated by the FD enabled field of the MIB message. That is, the FD mode enable indication information is indicated when the MIB message includes the FD enabled field.

For the case where the FD enabled filed is additionally added, one example of the MIB message may be:

$$MIB ::= SEQUENCE \{$$

$$...$$

$$fullDuplexEnabled\ ENUMERATED\ \{enabled\}\ OPTIONAL,$$

$$\}$$

In the above MIB message, the fullDuplexEnabled is the FD enabled field. Obviously, the FD mode enable indication information is indicated when the MIB message includes the fullDuplexEnabled.

In the above example of the MIB message, it may replace the spare field of the MIB message with the fullDuplexEnabled. Alternatively, it may introduce a new fullDuplexEnabled field additionally while retaining the spare field, in which the FD mode enable indication information is indicated by the fullDuplexEnabled introduced additionally.

When the FD mode enable indication information is carried via the spare field or the FD enabled field of the MIB message, it may clarify effective time of the FD mode. For example, it determines the effective time of enabling the FD-enabled mode for the UE in the following schemes.

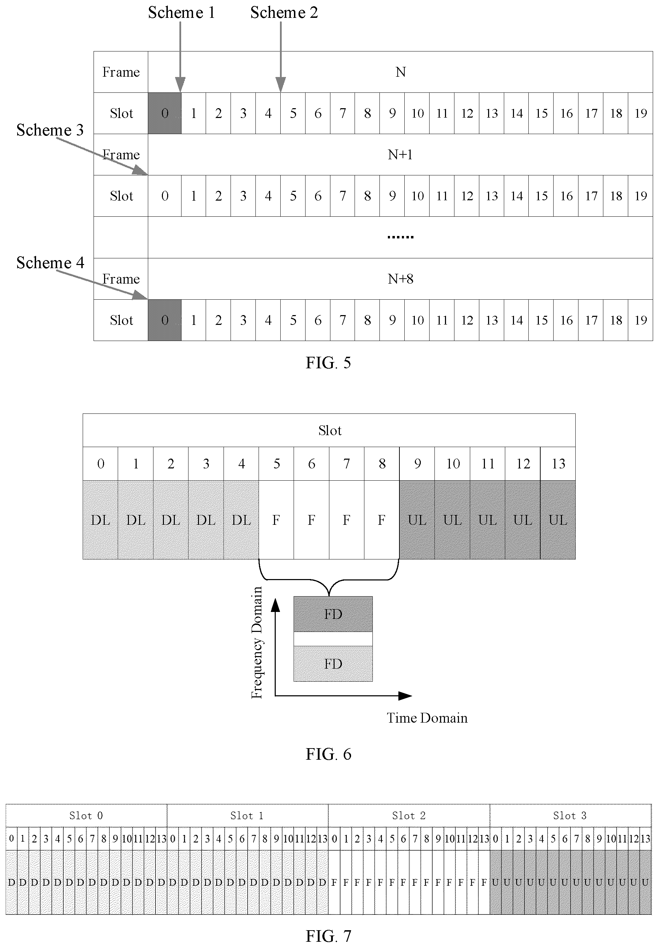

Scheme 1: a slot next to a slot at which the MIB message is transmitted, i.e., the slot next to the transmission slot of the MIB message. That is, it becomes effective to enable the FD mode at the slot next to the slot at which the MIB message is transmitted. By referring to FIG. 5, the MIB message is transmitted every 8 frames, i.e., once every 80ms. As illustrated in FIG. 5, the MIB message is transmitted at Slot 0 of the N-th frame and the (N+8)-th frame. Obviously, the slot at which the MIB message is transmitted is Slot 0 of the N-th frame and the (N+8)-th frame. Therefore, the FD mode becomes effective at Slot 1 of the N-th frame.

Scheme 2: the M-th slot after the slot at which the MIB message is transmitted, i.e., the M-th slot after the transmission slot of the MIB message. That is, it becomes effective to enable the FD mode at the M-th slot after the slot at which the MIB message is transmitted.

The M is a fixed value agreed between the BS and the UE, and the M is a positive integer. For example, the M is the fixed value agreed between the BS and the UE based on a capability of the UE, such as 4, 5, 6, 7, etc., and there is unnecessary for the BS to inform the UE of the value of the M through specific signaling.

By referring to FIG. 5, M=5 is taken as an example. Since the slot at which the MIB message is transmitted is Slot 0 of the N-th frame, the FD mode becomes effective at Slot 5 (the fifth slot after Slot 0) of the N-th frame.

Scheme 3: the first slot of a frame next to a frame in which the MIB message is transmitted, i.e., the first slot in the first frame after the transmission frame of the MIB message. That is, it becomes effective to enable the FD mode at the first slot of the frame next to the frame in which the MIB message is transmitted. By referring to FIG. 5, the slot at which the MIB message is transmitted is Slot 0 of the N-th frame, and therefore, the FD mode becomes effective at Slot 0 of the (N+1)-th frame.

Scheme 4: the first slot of a period next to a period in which the MIB message is transmitted, i.e., the first slot of the first period after the transmission period of the MIB message. That is, it becomes effective to enable the FD mode at the first slot of the period next to the period in which the MIB message is transmitted. By referring to FIG. 5, the slot at which the MIB message is transmitted is Slot 0 of the N-th frame, and therefore, the FD mode becomes effective at Slot 0 of the (N+8)-th frame.

At step S13, the UE receives the MIB message from the BS, and the MIB message may include the FD mode enable indication information. For example, after receiving the MIB message, the UE determines that the FD mode enable indication information is received from the BS if the spare field of the MIB message indicates the FD mode enable indication information. Alternatively, the UE determines that the FD mode enable indication information is received from the BS if the MIB message includes the FD enabled field (fullDuplexEnabled).

At step S14, the UE enables the FD mode for the UE based on the FD mode enable indication information.

The UE may enable the FD mode for the UE itself if the UE determines that the FD mode enable indication information is received from the BS. After enabling the FD mode for the UE, the symbol in the slot is expected by the UE to be the F symbol, the DL symbol or the UL symbol, and the F symbol in the slot is expected by the UE to be used as the FD, the DL, the UL or the GP.

When the FD mode is enabled for the UE, it also determines the effective time of the FD mode for the UE. For example, it determines the effective time of enabling the FD mode for the UE in the following schemes.

Scheme 1: a slot next to a slot at which the MIB message is received, i.e., the slot next to the reception slot of the MIB message. That is, it becomes effective to enable the FD mode at the slot next to the slot at which the MIB message is received.

Scheme 2: the M-th slot after the slot at which the MIB message is received, i.e., the M-th slot after the reception slot of the MIB message. That is, it becomes effective to enable the FD mode at the M-th slot after the slot at which the MIB message is received. The M is a fixed value agreed between the BS and the UE, and the M is a positive integer.

Scheme 3: the first slot of a frame next to a frame in which the MIB message is received, i.e., the first slot of the frame next to the reception frame of the MIB message. That is, it becomes effective to enable the FD mode at the first slot of the frame next to the frame in which the MIB message is received.

Scheme 4: the first slot of a period next to a period in which the MIB message is received, i.e., the first slot of the period next to the reception period of the MIB message. That is, it becomes effective to enable the FD mode at the first slot of the period next to the period in which the MIB message is received.

The above Scheme 1 - Scheme 4 are similar to the schemes illustrated in FIG. 5, respectively, and will not be repeated herein.

In one example, the FD mode is not enabled for the UE. Thus, the symbol in the slot is expected by the UE to be the F symbol, the DL symbol or the UL symbol, and the F symbol in the slot is expected by the UE to be used as the DL, the UL or the GP.

At step S15, the BS determines a target frame structure. The target frame structure may include a plurality of slots, each slot may include a plurality of symbols, and the symbol may be the F symbol, the DL symbol, or the UL symbol.

The target frame structure is used for implementing a data processing (e.g., a data transmission and/or a data reception). The BS determines the target frame structure and implements the data processing based on the target frame structure. The UE also determines the target frame structure and implements the data processing based on the target frame structure. In addition, the target frame structure determined by the BS is the same as the target frame structure determined by the UE.

At step S16, the BS transmits a UL-DL common configuration message to the UE. The UL-DL common configuration message includes one or more frame structure parameters corresponding to the target frame structure, and the one or more frame structure parameters indicate the target frame structure.

At step S17, the UE receives the UL-DL common configuration message, parses the UL-DL common configuration to obtain the one or more frame structure parameters, and determines the target frame structure based on the one or more frame structure parameters.

At step S18, the BS and the UE perform the data processing based on the target frame structure.

For example, if the operation mode corresponding to the BS is the FD-enabled mode and the FD mode is enabled for the UE, the plurality of symbols in the target frame structure may be the F symbols, the DL symbols, or the UL symbols. During performing the data processing based on the target frame structure, when the symbol in the slot is the DL symbol, the BS processes the DL data on the time-domain resource related to the DL symbol, and the UE processes the DL data on the time-domain resource related to the DL symbol. When the symbol in the slot is the UL symbol, the BS processes the UL data on the time-domain resource related to the UL symbol, and the UE processes the UL data on the time-domain resource related to the UL symbol.

In addition, when the symbol in the slot is the F symbol used as the FD, the BS may process both the UL data and the DL data on the time-domain resource related to the F symbol, and the UE may process both the UL data and the DL data on the time-domain resource related to the F symbol.

If the F symbol in the slot is used as the DL, the BS processes the DL data on the time-domain resource related to the F symbol, and the UE processes the DL data on the time-domain resource related to the F symbol.

If the F symbol in the slot is used as the UL, the BS processes the UL data on the time-domain resource related to the F symbol, and the UE processes the UL data on the time-domain resource related to the F symbol.

As another example, if the operation mode corresponding to the BS is the FD-disabled mode and the FD mode is not enabled for the UE, the plurality of symbols in the target frame structure may be the F symbols, the DL symbols, or the UL symbols. During performing the data processing based on the target frame structure, when the symbol in the slot is the DL symbol, the BS processes the DL data on the time-domain resource related to the DL symbol and the UE processes the DL data on the time-domain resource related to the DL symbol; when the symbol in the slot is the UL symbol, the BS processes the UL data on the time-domain resource related to the UL symbol and the UE processes the UL data on the time-domain resource related to the UL symbol.

In addition, when the symbol in the slot is the F symbol, if the F symbol in the slot is used as the DL, the BS processes the DL data on the time-domain resource related to the F symbol and the UE processes the DL data on the time-domain resource related to the F symbol; if the F symbol in the slot is used as the UL, the BS processes the UL data on the time-domain resource related to the F symbol and the UE processes the UL data on the time-domain resource related to the F symbol.

In the above example, step S11 - step S18 are targeted at the UE that supports the DF mode. With respect to the UE that does not support the FD mode, in step S13 and step S14, the UE ignores the FD mode enable indication information when receiving the MIB message from the BS, that is, it does not enable the FD mode for the UE based on the FD mode enable indication information. The symbol in the slot is expected by the UE to be the F symbol, the DL symbol or the UL symbol, and the F symbol in the slot is expected by the UE to be used as the DL, the UL, or the GP. When the UE performs the data processing based on the target frame structure in step S18 and the symbol in the slot is the F symbol, the UE processes the DL data on the time-domain resource related to the F symbol in the slot if the F symbol is used as the DL, and the UE processes the UL data on the time-domain resource related to the F symbol in the slot if the F symbol is used as the UL.

In the above example, if the operation mode corresponding to the BS is the FD-enabled mode, the BS may flexibly schedule the F symbol according to the service requirements, and allow the transmission and the reception simultaneously on the F symbol.

For the UE that does not support the FD mode, the F symbol is not expected by the UE to be configured to transmit the UL data and receive the DL data simultaneously. For various UE (e.g., first UE and second UE), the BS configures the F symbol corresponding to the first UE for transmitting the UL data and configures the F symbol corresponding to the second UE (which has the same location as the F symbol corresponding to the first UE) for receiving the DL data. Therefore, the BS can transmit the UL data and receive the DL data at that F symbol simultaneously.

It is expected by the UE that does not support the FD mode to reserve sufficient GP resources during switching between the DL data and the UL data, so as to perform a UL-DL switching protection.

For the UE that supports the FD mode, the F symbol may be configured to transmit the UL data and receive the DL data simultaneously. That is, the UE transmits the UL data and receives the DL data simultaneously without reserving the GP resources.

In one example, the symbol configured as the F symbol via a TDD-UL-DL-ConfigCommon may be changed via a TDD-UL-DL-ConfigDedicated by the BS and be configured to be the DL symbol or the UL symbol. That is, after the symbol in the slot is configured as the F symbol via the TDD-UL-DL-ConfigCommon, the F symbol may be changed to the DL symbol or the UL symbol via the TDD-UL-DL-ConfigDedicated.

In this case, the F symbol configured as the DL symbol or the UL symbols via the TDD-UL-DL-ConfigDedicated is not expected by the UE to be used as the FD. However, other F symbols that have not been changed may be still used as the DL, the UL, the GP or the FD.

Another example of the present invention provides a method of configuring a TDD frame structure, in which the frame structure may include a plurality of slots, each of the slots includes a plurality of symbols, and the symbol may be an F symbol, a DL symbol, or a UL symbol. The F symbol is used as FD, DL, UL, or a GP if a BS enables an FD mode, and the F symbol is used as the DL, the UL, or the GP if the BS disables the FD mode.

In this example, the method of configuring a TDD frame structure may include the following steps.

At step S21, the BS determines an operation mode corresponding to the BS itself, either an FD-enabled mode or an FD-disabled mode.

At S22, the BS in the FD-enabled mode transmits UE an SIB message that includes FD mode enable indication information. Alternatively, the BS in the FD-disabled mode does not transmit the FD mode enable indication information to the UE via the SIB message.

When a system broadcast is used, the FD mode enable indication information may be carried via the SIB message. That is, the FD mode enable indication information may be broadcast via the SIB message. In particular, the FD mode enable indication information may be broadcast via an SIBx message, where the SIBx means an SIB with any sequence number. Since enabling the FD mode belongs to an important system configuration parameter, SIB1 message may be used to broadcast the FD mode enable indication information.

For example, the FD mode enable indication information is indicated by a UL-DL common configuration message (TDD-UL-DL-ConfigCommon) of the SIB message. Considering that system information which is the same as that in the MIB or the SIB1 may be transmitted via a serving cell common configuration (servingCellConfigCommon), the FD mode enable indication information may be indicated via a common parameter that is present in both the serving cell common configuration and the SIB1. The UL and DL common configuration message is the common parameter of the serving cell common configuration and the SIB1, and may configure the frame structure. Therefore, the FD mode enable indication information is introduced via the UL and DL common configuration message.

For example, an example of the UL-DL common configuration message (TDD-UL-DL-ConfigCommon) may be:

$$TDD\text{-}UL\text{-}DL\text{-}ConfigCommon ::= SEQUENCE \{$$

$$...$$

$$fullDuplexEnabled\ ENUMERATED\ \{enabled\}\ OPTIONAL,$$

$$...$$

$$\}$$

In particular, the "fullDuplexEnabled" means the FD mode enable indication information. That is, the FD mode enable indication information is indicated when the UL-DL common configuration message includes the "fullDuplexEnabled".

As another example, it may additionally add an FD enabled field into the SIB message, and FD mode enable indication information may be indicated by the FD enabled field of the SIB message. That is, the FD mode enable indication information is indicated when the SIB message includes the FD enabled field (fullDuplexEnabled).

The FD enabled field newly introduced into the SIB message is an optional field. If the field is not configured, it means that the BS does not enable the FD mode. If the FD enabled field is configured as *enabled,* it means that the BS enables the FD mode and the F symbol may be used as the DL, the UL, the GP or the FD.

When the FD mode enable indication information is carried via the SIB message, it may also clarify effective time of the FD mode. For example, the effective time of enabling the FD mode may be determined in the following schemes. Scheme 1: a slot next to a slot at which the SIB message is transmitted, i.e., the slot next to the transmission slot of the SIB message. That is, it becomes effective to enable the FD mode at the slot next to the slot at which the SIB message is transmitted. Scheme 2: the M-th slot after the slot at which the SIB message is transmitted, i.e., the M-th slot after the transmission slot of the SIB message. That is, it becomes effective to enable the FD mode at the M-th slot after the slot at which the SIB message is transmitted. The M is a fixed value agreed between the BS and the UE, and the M is a positive integer. Scheme 3: the first slot of a frame next to a frame in which the SIB message is transmitted, i.e., the first slot in the first frame after the transmission frame of the SIB message. That is, it becomes effective to enable the FD mode at the first slot of the frame next to the frame in which the SIB message is transmitted. Scheme 4: the first slot of a period next to a period in which the SIB message is transmitted, i.e., the first slot of the first period after the transmission period of the SIB message. That is, it becomes effective to enable the FD mode at the first slot of the period next to the period in which the SIB message is transmitted.

At step S23, the UE receives the SIB message from the BS.

At step S24, the UE enables the FD mode for the UE based on the FD mode enable indication information if the SIB message carries the FD mode enable indication information.

When enabling the FD mode for the UE, it may also clarify the effective time of the FD mode. For example, the effective time of enabling the FD mode for the UE may be determined in the following schemes. Scheme 1: a slot next to a slot at which the SIB message is received, i.e., the slot next to the reception slot of the SIB message. That is, it becomes effective to enable the FD mode at the slot next to the slot at which the SIB message is received. Scheme 2: the M-th slot after the slot at which the SIB message is received, i.e., the M-th slot after the reception slot of the SIB message. That is, it becomes effective to enable the FD mode at the M-th slot after the slot at which the SIB message is received. The M is a fixed value agreed between the BS and the UE, and the M is a positive integer. Scheme 3: the first slot of a frame next to a frame in which the SIB message is received, i.e., the first slot of the frame next to the reception frame of the SIB message. That is, it becomes effective to enable the FD mode at the first slot of the frame next to the frame in which the SIB message is received. Scheme 4: the first slot of a period next to a period in which the SIB message is received, i.e., the first slot of the period next to the reception period of the SIB message. That is, it becomes effective to enable the FD mode at the first slot of the period next to the period in which the SIB message is received.

At step S25, the BS determines a target frame structure. The target frame structure may include a plurality of slots, each of the slots may include a plurality of symbols, and the symbol may be the F symbol, the DL symbol, or the UL symbol.

At step S26, the BS transmits a UL-DL common configuration message to the UE. The UL-DL common configuration message includes one or more frame structure parameters corresponding to the target frame structure, and the one or more frame structure parameters indicate the target frame structure.

At step S27, the UE receives the UL-DL common configuration message, parses the UL-DL common configuration message to obtain the one or more frame structure parameters, and determines the target frame structure based on the one or more frame structure parameters.

At step S28, the BS and the UE perform a data processing based on the target frame structure.

Another example of the present invention provides a method of configuring a TDD frame structure, in which the frame structure may include a plurality of slots, each of the slots includes a plurality of symbols, and the symbol may be an F symbol, a DL symbol, or a UL symbol. The F symbol is used as FD, DL, UL, or a GP if a BS enables an FD mode, and the F symbol is used as the DL, the UL, or the GP if the BS disables the FD mode.

In this example, the method of configuring a TDD frame structure may include the following steps.

At step S31, the BS determines the operation mode corresponding to the BS itself, either an FD-enabled mode or an FD-disabled mode.

At step S32, the BS in the FD-enabled mode transmits UE an RRC reconfiguration message that includes FD mode enable indication information. Alternatively, the BS in the FD-disabled mode does not transmit the FD mode enable indication information to the UE via the RRC reconfiguration message.

For example, it may additionally add an FD enabled field into the RRC reconfiguration message, and FD mode enabling indication information may be indicated by the FD enabled field of the RRC reconfiguration message. That is, it indicates the FD mode enable indication information is indicated when the RRC reconfiguration message includes the FD enabled field (fullDuplexEnabled). In particular, the FD enabled field newly introduced into the RRC reconfiguration message is an optional field. If the field is not configured, it means that the BS does not enable the FD mode. If the FD enabled field is configured as *enabled,* it means that the BS enables the FD mode and the F symbol may be used as the DL, the UL, the GP or the FD.

Considering that system information which is the same as that in MIB or SIB1 may be transmitted through a serving cell common configuration (servingCellConfigCommon), the FD mode enable indication information may be indicated in the serving cell common configuration, and the serving cell common configuration may be transmitted by the RRC reconfiguration message. Therefore, the FD mode enable indication information is transmitted by introducing the FD enabled field into the RRC reconfiguration message.

When the FD mode enable indication information is carried via the RRC reconfiguration message, it may also clarify effective time of the FD mode. For example, the effective time of enabling the FD mode may be determined in the following schemes. Scheme 1: a slot next to a slot at which an RRC reconfiguration completion message corresponding to the RRC reconfiguration message is received. That is, it becomes effective to enable the FD mode at the slot next to the slot at which the RRC reconfiguration completion message is received. Scheme 2: the M-th slot after the slot at which the RRC reconfiguration completion message corresponding to the RRC reconfiguration message is received. That is, it becomes effective to enable the FD mode at the M-th slot after the slot at which the RRC reconfiguration completion message is received. The M is a fixed value agreed between the BS and the UE, and the M is a positive integer.

When the BS transmits the RRC reconfiguration message to the UE, the UE may transmit the RRC reconfiguration completion message to the BS after receiving the RRC reconfiguration message. The BS may receive the RRC reconfiguration completion message corresponding to the RRC reconfiguration message, and takes the slot at which the RRC reconfiguration completion message corresponding to the RRC reconfiguration message is received as a reference basis.

At step S33, the UE receives the RRC reconfiguration message from the BS.

At step S34, the UE enables the FD mode for the UE based on the FD mode enable indication information if the RRC reconfiguration message carries the FD mode enable indication information.

When enabling the FD mode for the UE, it may also clarify the effective time of the FD mode. For example, the effective time of enabling the FD mode for the UE is determined in the following schemes. Scheme 1: a slot next to a slot at which the RRC reconfiguration completion message corresponding to the RRC reconfiguration message is transmitted. That is, it becomes effective to enable the FD mode at the slot next to the slot at which the RRC reconfiguration completion message is transmitted. Scheme 2: the M-th slot after the slot at which the RRC reconfiguration completion message corresponding to the RRC reconfiguration message is transmitted. That is, it becomes effective to enable the FD mode at the M-th slot after the slot at which the RRC reconfiguration completion message is transmitted. The M is a fixed value agreed between the BS and the UE, and the M is a positive integer.

After receiving the RRC reconfiguration message, the UE may transmit the RRC reconfiguration completion message to the BS. Therefore, the slot at which the RRC reconfiguration completion message corresponding to the RRC reconfiguration message is transmitted by the UE is taken as the reference basis.

At step S35, the BS determines a target frame structure. The target frame structure may include a plurality of slots, each of the slots may include a plurality of symbols, and the symbol may be the F symbol, the DL symbol, or the UL symbol.

At step S36, the BS transmits a UL-DL common configuration message to the UE. The UL-DL common configuration message includes one or more frame structure parameters corresponding to the target frame structure, and the one or more frame structure parameters indicate the target frame structure.

At step S37, the UE receives the UL-DL common configuration message, parses the UL-DL common configuration message to obtain the one or more frame structure parameters, and determines the target frame structure based on the one or more frame structure parameters.

At step S38, the BS and the UE perform a data processing based on the target frame structure.

Another example of the present invention provides a method of configuring a TDD frame structure in which the frame structure is informed to UE by means of slot format indicators. The frame structure may include a plurality of slots, each of the slots includes a plurality of symbols, and the symbol may be an F symbol, a DL symbol, or a UL symbol. The F symbol is used as FD, DL, UL, or a GP if the BS enables an FD mode, and the F symbol is used as the DL, the UL, or the GP if the BS disables the FD mode. By referring to FIG. 6, it is an example of the frame structure. In FIG.6, the slot of the frame structure includes the F symbols, the DL symbols and the UL symbols, and all of the F symbols are the FD symbols. Of course, the F symbols may also be used as the DL, the UL or the GP. It may achieve a UL-DL switching protection when an F symbol is used as the GP.

In this example, the method of configuring a TDD frame structure may include the following steps.

At step S41, the BS determines the operation mode corresponding to the BS itself, either an FD-enabled mode or an FD-disabled mode.

Step S42, the BS in the FD-enabled mode transmits the UE a slot format indication message (which is, for example, carried by RRC signaling). The slot format indication message carries FD mode enable indication information. In particular, the slot format indication message carrying the FD mode enable indication information may include, but not limited to that: the slot format indication message carries the FD mode enable indication information when the slot format indication message includes an FD slot format combination field.

The BS may generate at least one slot format combination (e.g., SFC). Each slot format combination includes at least one slot format. The slot formats may be selected from Table 1 or may be obtained in other ways. For example, the BS generates Slot format combination s1 and Slot format combination s2. Slot format combination s1 includes Slot format 0, Slot format 0, Slot format 2, and Slot format 1. Slot format combination s2 includes Slot format 0, Slot format 2, Slot format 1, and Slot format 1.

Each slot format may be identified by a unique slot identifier. The slot identifier is denoted as a slot format index. For example, Slot format 0 corresponds to Slot format index 0, Slot format 1 corresponds to Slot format index 1, Slot format 2 corresponds to Slot format index 2, and so on.

Each slot format combination may be identified by a unique combination identifier. For example, the combination identifier of Slot format combination s1 is SFC 0, and the combination identifier of Slot format combination s2 is SFC 1.

The BS may transmit the slot format indication message to the UE. The slot format indication message may include the combination identifier corresponding to each slot format combination, and include the slot format indexes of all of the slot formats corresponding to each slot format combination, that is, include a mapping relationship between the combination identifiers and the slot format indexes. As shown in Table 2, it is an example of the mapping relationship carried by the slot format indication message.

Table 2

| SFC 0 | Slot format index 0, Slot format index 0, Slot format index 2, Slot format index 1 |
|-------|-----------------------------------------------------------------------------------|
| SFC 1 | Slot format index 0, Slot format index 2, Slot format index 1, Slot format index 1 |

The slot format indication message is carried via RRC signaling. In one example, the slot format indication message may be carried via RRC signaling SlotFormatCombinationsPerCell.

Based on the slot format indication message described above, in this example, the slot format indication message may be extended, so that the slot format indication message carries the FD mode enable indication information.

For example, an FD slot format combination field, which is denoted as SlotFormatCombination-FullDuplex, is extended in the slot format indication message. The slot format indication message carries the FD mode enable indication information if the slot format indication message includes the FD slot format combination field, otherwise the slot format indication message does not carry the FD mode enable indication information.

In view of the above, the BS may transmit the slot format indication message to the UE. The slot format indication message includes the FD slot format combination field and indicates the FD mode enable indication information via the FD slot format combination field. In addition, the slot format indication message includes the combination identifiers corresponding to one or more slot format combinations, and includes the mapping relationship between the slot format combinations and the slot format indexes of all of the corresponding slot formats.

For example, an example of the slot format indication message may be shown as the following codes.

*SlotFormatCombinationsPerCell ::= SEQUENCE {*

 *...*

 *slotFormatCombinations SEQUENCE (SIZE*

*(1..maxNrofSlotFormatCombinationsPerSet)) OF SlotFormatCombination OPTIONAL,*

 *slotFormatCombinations-FullDuplex SEQUENCE (SIZE*

*(1..maxNrofSlotFormatCombinationsPerSet)) OF SlotFormatCombination-FullDuplex*

*OPTIONAL,*

 *...*

 *}*

In particular, the SlotFormatCombination-FullDuplex means the FD slot format combination field. The FD mode enable indication information is indicated when the SlotFormatCombination-FullDuplex is carried.

The field SlotFormatCombination-FullDuplex may carry the combination identifiers corresponding to the slot format combinations and the slot format indexes of the slot formats. The field SlotFormatCombination-FullDuplex configures up to maxNrofSlotFormatCombinationsPerSet elements, and each element is defined as follows.

*SlotFormatCombination-FullDuplex ::= SEQUENCE {*

 *slotFormatCombinationId-FullDuplex SlotFormatCombinationId,*

 *slotFormats-FullDuplex SEQUENCE (SIZE*

*(1..maxNrofSlotFormatsPerCombination)) OF INTEGER (0..255)*

 *}*

In particular, the slotFormatCombinationId-FullDuplex means the identifiers, whose values are taken from 0 to maxNrofSlotFormatCombinationsPerSet-1 in sequence, i.e., whose values are 0, 1, 2, ..., maxNrofSlotFormatCombinationsPerSet-1. The slotFormats-FullDuplex means the slot format indexes corresponding respectively to the slot formats, whose max number may be configured as the maxNrofSlotFormatsPerCombination and whose values range from 0 to 255. If the slotFormatCombinations is also configured, this parameter is to be ignored. That is, the frame structure configuration in the FD mode is to override the frame structure configuration in an HD mode. Conversely, if the slotFormatCombinations-FullDuplex is not configured, the frame structure depends on the configuration of the slotFormatCombinations, i.e., it works in accordance with the HD mode in TDD.

At step S43, the UE receives the slot format indication message from the BS. If the slot format indication message includes the FD slot format combination field, the UE determines that the slot format indication message carries the FD mode enable indication information.

If the slot format indication message includes the FD slot format combination field, the UE may also parse the FD slot format combination field to obtain the combination identifiers corresponding to the one or more slot format combinations, and obtain the mapping relationship between the slot format combinations and the slot format indexes of all of the corresponding slot formats. For example, the UE may parse the FD slot format combination field to obtain the mapping relationship illustrated in Table 2.

If the slot format indication message does not include the FD slot format combination field slotFormatCombinations-FullDuplex, the UE may also parse the slot format combination field slotFormatCombinations to obtain the combination identifiers corresponding to the one or more slot format combinations, and obtain the mapping relationship between the slot format combinations and the slot format indexes of all of the corresponding slot formats.

At step S44, the UE enables the FD mode for the UE itself based on the FD mode enable indication information if the slot format indication message carries the FD mode enable indication information. After enabling the FD mode for the UE, the symbol in the slot is expected by the UE to be the F symbol, the DL symbol or the UL symbol, and the F symbol in the slot is expected by the UE to be used as the FD, the DL, the UL or the GP.

At step S45, the BS selects a target slot format combination from all of the slot format combinations.

For example, the BS may select the target slot format combination from Slot format combination s1 and Slot format combination s2. Selecting Slot format combination s1 as the target slot format combination is taken as an example.

At step S46, the BS may transmit the combination identifier corresponding to the target slot format combination to the UE via a DCI message. For example, the BS may transmit the combination identifier corresponding to the target slot format combination to the UE via DCI format 2_0 through a periodic PDCCH.

At step S47, the UE receives the DCI message (e.g., DCI format 2_0) from the BS and parses the DCI message to obtain the combination identifier corresponding to the target slot format combination.

At step S48, the UE selects the target slot format combination corresponding to the combination identifier (i.e., the combination identifier parsed from the DCI message) from all of the slot format combinations.

For example, when the BS selects Slot format combination s1 as the target slot format combination, the combination identifier SFC 0 corresponding to the target slot format combination is transmitted to the UE via the DCI message. The UE selects Slot format combination s1 corresponding to the combination identifier SFC 0 from all of the slot format combinations, and takes Slot format combination s1 as the target slot format combination. The target slot format combination corresponds to Slot format index 0, Slot format index 0, Slot format index 2, and Slot format index 1.

The UE may use an SFI wireless network temporary indicator to detect the DCI message, such as DCI format 2_0, in accordance with a PDCCH scan period which is already configured, so as to obtain the combination identifier corresponding to the target slot format combination from an SFI index field of the detected DCI message.

If the FD slot format combination field (SlotFormatCombination-FullDuplex) is configured, the SFI index of the DCI message uses the SlotFormatCombination-FullDuplex, and the combination identifier corresponding to the target slot format combination is carried by the SlotFormatCombination- FullDuplex .

The number of bits of the SFI index in the DCI message is $\max(\lceil \log_2(maxFDSFIIndex + 1)\rceil, 1)$, and *maxFDSFIIndex* is determined by the maximum value of the SlotFormatCombination-FullDuplex which configures the FD SFIs. For example, if 4 FD SFIs are currently configured in total, the values of SlotFormatCombination-FullDuplex are 0, 1, 2, and 3, and then the number of bits of the SFI in the DCI is $\max(\lceil \log_2(3 + 1)\rceil, 1) = 2$. For example, if 2 SFCs are configured via the RRC signaling, the SFI in the DCI only requires one bit to indicate two SFCs.

The configuration in DCI format 2_0 may be shown in the following codes. In particular, FD Slot format indicator 1, FD Slot format indicator 2, ..., FD Slot format indicator N indicates the slotFormatCombinationId-FullDuplex in SlotFormatCombination-FullDuplex, respectively.

> *- If the higher layer parameter slotFormatCombToAddModList is configured,*
>
> *- if the higher layer parameter slotFormatCombinations-FullDuplex is configured*
>
> *- FD Slot format indicator 1, FD Slot format indicator 2, ..., FD Slot format indicator N,*
>
> *- else*
>
> *- Slot format indicator 1, Slot format indicator 2, ..., Slot format indicator N*

In one example, when the FD mode enable indication information is carried via the slot format indication

EP 4 429 374 A1

message, the BS may clarify effective time of the FD mode. For example, the effective time of enabling the FD mode may be determined in the following scheme: a transmission slot of the DCI message, i.e., the slot at which the DCI message is transmitted. That is, it becomes effective to enable the FD mode at the transmission slot of the DCI message. The UE may also clarify the effective time of the FD mode. For example, the effective time of enabling the FD mode for the UE may be determined in the following scheme: a reception slot of the DCI message, i.e., the slot at which the DCI message is received. That is, it becomes effective to enable the FD mode at the reception slot of the DCI message.

At step S49, the BS determines the target frame structure based on the target slot format combination. For example, since the target slot format combination corresponds to at least one slot format, e.g., when being taken as the target slot format combination, Slot format combination s1 corresponds to Slot format 0, Slot format 0, Slot format 2, and Slot format 1, the BS may determine the target frame structure based on all of the slot formats corresponding to the target slot format combination after selecting the target slot format combination from all of the slot format combinations.

At step S50, the UE determines the target frame structure based on the target slot format combination. For example, since the target slot format combination corresponds to at least one slot format, the UE may determine the target frame structure based on all of the slot formats corresponding to the target slot format combination after selecting the target slot format combination from all of the slot format combinations.

At step S51, the BS and the UE perform a data processing based on the target frame structure.

For example, if the operation mode corresponding to the BS is the FD-enabled mode and the FD mode is enabled for the UE, the plurality of symbols in the target frame structure may be the F symbols, the DL symbols, or the UL symbols. When the data processing is performed based on the target frame structure and the symbol in the slot is the F symbol used as the FD, the BS may process both the UL data and the DL data simultaneously on a time-domain resource related to the F symbol, and the UE may process both the UL data and the DL data simultaneously on the time-domain resource related to the F symbol.

For example, assuming that the frame structure is not configured via the TDD-UL-DL-ConfigCommon currently and SFC0 is determined to be adopted, the BS transmits the SFC0 to the UE via the DCI. Both the BS and the UE can learn the target slot format combination and determine the target frame structure based on the target slot format combination. By referring to FIG. 7, it is an example of the target frame structure. The data processing is performed by the BS and the UE based on the target frame structure illustrated in FIG. 7, whose procedure is not repeated.

The above example is targeted at the UE that supports the FD mode. With respect to the UE that does not support the FD mode, the UE ignores the contents related to the FD mode, e.g., the FD mode indication information, and does not enable the FD mode for the UE based on the FD mode enable indication information. The symbol in the slot is expected by the UE to be the F symbol, the DL symbol or the UL symbol, and the F symbol in the slot is expected by the UE to be used as the DL, the UL, or the GP.

In one example, if the BS has activated the FD mode via the MIB message and has configured the TDD-UL-DL-ConfigCommon, or if the BS has activated the FD mode via the TDD-UL-DL-ConfigCommon, the BS can further configure the F symbol of the TDD-UL-DL-ConfigCommon as a DL symbol or a UL symbol, but cannot change the UL symbol or the DL symbol of the TDD-UL-DL-ConfigCommon. The F symbol may be used as the4 DL, the UL, the GP or the FD.

Regardless of whether the TDD-UL-DL-ConfigCommon is currently configured or not, if the BS does not activate the FD mode via the MIB message or the TDD-UL-DL-ConfigCommon and once the UE obtains the configurations of the SlotFormatCombination-FullDuplex in the SlotFormatCombinationsPerCell through the RRC signaling and obtains the slot formats based on the indication from the DCI 2_0, the UE believes that the FD mode is currently enabled, and the effective time of the FD mode is the slot at which DCI 2_0 is received.

According to the above technical solutions, it can be seen from the examples of the present invention that the operation mode of the BS may be classified into an FD-enabled mode and an FD-disabled mode. In the FD-enabled mode, the F symbol in a slot is allowed to be used as the FD, that is, the function of the F symbol is extended to act as the FD symbol, so that the UL data and the DL data are capable of being simultaneously processed on the time-domain resource related to the F symbol in the slot when the F symbol is used as the FD. Therefore, the UL data and the DL data can be simultaneously processed on the same time-domain resource, thereby utilizing time-domain resources more effectively, improving resource utilization, increasing a network coverage and a network capacity, and reducing a transmission delay, for example, reducing a UL transmission delay. Without affecting the current 5G system, the frame structure for the FD mode is configured via the UL-DL common or dedicated configuration or the slot format indication. After the configuration of the frame structure is completed, the BS and the UE can transmit and receive data according to the type of the frame structure. The BS and the UE in the FD mode can perform the transmission and the reception simultaneously, but the UE in the HD mode can only perform either the transmission or the reception at the same time. The functionality of the F symbol is extended to act as the FD symbol, so as to configure the FD symbol more flexibly.

Based on the same inventive concept, apparatuses for configuring a TDD frame structure corresponding to the above methods of configuring a TDD frame structure, BSs and UE are provided. Considering that the BSs and the UE solve problems in accordance with the principles similar to the above methods of configuring a TDD frame structure, the implementations of the BSs and the UE may make reference to the implementations of the methods, without giving unnecessary details of their repetitions.

Based on the same application concept as the methods described above, an apparatus for configuring a TDD frame structure is provided in one example of the present invention and may be applied to a BS. The apparatus may include:

a determining module, configured to determine an operation mode of the BS, where the operation mode is either an FD-enabled mode or an FD-disabled mode, and where an F symbol in a slot is allowed to be used as FD, DL, UL or a GP in the FD-enabled mode, and to be used as the DL, the UL or the GP in the FD-disabled mode; a transmitting module, configured to transmit, in the FD-enabled mode, FD mode enable indication information to UE for enabling an FD mode for the UE based on the FD mode enable indication information; and a processing module, configured to be capable of processing UL data and DL data simultaneously on a time-domain resource related to the F symbol in the slot when the F symbol is used as the FD in the FD-enabled mode.

In one example, when transmitting the FD mode enable indication information to the UE, the transmitting module is specifically configured to: transmit a system broadcast message to the UE, where the system broadcast message carries the FD mode enable indication information; or, transmit an RRC reconfiguration message to the UE, where the RRC reconfiguration message carries the FD mode enable indication information.

In one example, when the system broadcast message is an MIB message, the FD mode enable indication information is indicated via a spare field of the MIB message. Alternatively, the MIB message includes an FD enabled field, and the FD mode enable indication information is indicated via the FD enabled field of the MIB message. When the MIB message carries the FD mode enable indication information, effective time of enabling the FD mode is determined by the processing module in the following scheme: a slot next to a slot at which the MIB message is transmitted; or the M-th slot after the slot at which the MIB message is transmitted, where the M is a fixed value agreed between the BS and the UE, and the M is a positive integer; or the first slot of a frame next to a frame in which the MIB message is transmitted; or the first slot of a period next to a period in which the MIB message is transmitted.

In one example, when the system broadcast message is an SIB message, the FD mode enable indication information is indicated via a UL-DL common configuration message of the SIB message. Alternatively, the SIB message includes an FD enabled field, and the FD mode enable indication information is indicated via the FD enabled field of the SIB message. When the SIB message carries the FD mode enable indication information, the effective time of enabling the FD mode is determined by the processing module in the following scheme: a slot next to a slot at which the SIB message is transmitted; or the M-th slot after the slot at which the SIB message is transmitted, where the M is a fixed value agreed between the BS and the UE, and the M is a positive integer; or the first slot of a frame next to a frame in which the SIB message is transmitted; or the first slot of a period next to a period in which the SIB message is transmitted.

In one example, when the RRC reconfiguration message carries the FD mode enable indication information, the RRC reconfiguration message includes an FD enabled field and the FD mode enable indication information is indicated via the FD enabled field of the RRC reconfiguration message. When the RRC reconfiguration message carries the FD mode enable indication information, the effective time of enabling the FD mode is determined by the processing module in the following scheme: a slot next to a slot at which an RRC reconfiguration completion message corresponding to the RRC reconfiguration message is received; or the M-th slot after the slot at which the RRC reconfiguration completion message corresponding to the RRC reconfiguration message is received, where the M is a fixed value agreed between the BS and the UE, and the M is a positive integer.

In one example, the determining module is further configured to determine a target frame structure; the transmitting module is further configured to transmit a UL-DL common configuration message to the UE, where the UL-DL common configuration message includes one or more frame structure parameters corresponding to the target frame structure, so that the UE determines the target frame structure based on the one or more frame structure parameters, and where the target frame structure includes a plurality of slots, each of the slots includes a plurality of symbols, and the symbol is the F symbol, a DL symbol or a UL symbol; and the processing module is further configured to perform a data processing based on the target frame structure.

In one example, when transmitting the FD mode enable indication information to the UE, the transmitting module is specifically configured to: transmit a slot format indication message to the UE, where the slot format indication message carries the FD mode enable indication information.

The slot format indication message carries the FD mode enable indication information, including that: the slot format indication message carries the FD mode enable indication information if the slot format indication message includes an FD slot format combination field. In particular, one or more combination identifiers, each of which corresponds to a combination of at least one slot format, are carried via the FD slot format combination field if the slot format indication message includes the FD slot format combination field. The determining module is further configured to determine a target slot format combination. The transmitting module is further configured to transmit the combination identifier corresponding to the target slot format combination to the UE via a DCI message, so that the UE determines the target slot format combination based on the combination identifier corresponding to the target slot format combination. When the slot format indication message carries the FD mode enable indication information, the effective time of enabling the FD mode is determined by the processing module in the following scheme: a slot at which the DCI message is transmitted.

The determining module is further configured to determine a target frame structure based on the target slot format combination. The target frame structure includes a plurality of slots, each of the slots includes a plurality of symbols, and the symbol is the F symbol, the DL symbol or the UL symbol. The processing module is further configured to perform the data processing based on the target frame structure.

Based on the same application concept as the methods described above, an apparatus for configuring a TDD frame structure is provided in one example of the present invention and may be applied to UE that supports an FD mode. The apparatus may include:

a receiving module, configured to receive FD mode enable indication information from a BS, where the BS in an FD-enabled mode transmits the FD mode enable indication information to the UE;

an enabling module, configured to enable an FD mode for the UE based on the FD mode enable indication information, where after enabling the FD mode for the UE, an F symbol in a slot is expected by the UE to be used as FD, DL, UL, or a GP; and

a processing module, configured to be capable of processing UL data and DL data simultaneously on a time-domain resource related to the F symbol in the slot when the F symbol is used as the FD after the FD mode is enabled for the UE.

In one example, when receiving the FD mode enable indication information from the BS, the receiving module is configured to: receive a system broadcast message from the BS, where the system broadcast message carries the FD mode enable indication information; or, receive an RRC reconfiguration message from the BS, where the RRC reconfiguration message carries the FD mode enable indication information.

In one example, if the system broadcast message is an MIB message, the FD mode enable indication information is indicated via a spare field of the MIB message. Alternatively, the MIB message includes an FD enabled field, and the FD mode enable indication information is indicated via the FD enabled field of the MIB message.

When the MIB message carries the FD mode enable indication information, effective time of enabling the FD mode is determined by the processing module in the following schemes: a slot next to a slot at which the MIB message is received; or the M-th slot after the slot at which the MIB message is received, where the M is a fixed value agreed between the BS and the UE, and the M is a positive integer; or the first slot of a frame next to a frame in which the MIB message is received; or the first slot of a period next to a period in which the MIB message is received.

In one example, if the system broadcast message is an SIB message, the FD mode enable indication information is indicated via a UL-DL common configuration message of the SIB message. Alternatively, the SIB message includes an FD enabled field, and the FD mode enable indication information is indicated via the FD enabled field of the SIB message. When the SIB message carries the FD mode enable indication information, the effective time of enabling the FD mode is determined by the processing module in the following schemes: a slot next to a slot at which the SIB message is received; or the M-th slot after the slot at which the SIB message is received, where the M is a fixed value agreed between the BS and the UE, and the M is a positive integer; or the first slot of a frame next to a frame in which the SIB message is received; or the first slot of a period next to a period in which the SIB message is received.

In one example, if the RRC reconfiguration message carries the FD mode enable indication information, the RRC reconfiguration message includes an FD enabled field and the FD mode enable indication information is indicated via the FD enabled field of the RRC reconfiguration message. When the RRC reconfiguration message carries the FD mode enable indication information, the effective time of enabling the FD mode is determined by the processing module in the following schemes: a slot next to a slot at which an RRC reconfiguration completion message corresponding to the RRC reconfiguration message is transmitted; or the M-th slot after the slot at which the RRC reconfiguration completion message corresponding to the RRC reconfiguration message is transmitted, where the M is a fixed value agreed between the BS and the UE, and the M is a positive integer.

In one example, the receiving module is further configured to receive a UL-DL common configuration message from the BS, where the UL-DL common configuration message includes one or more frame structure parameters corresponding to a target frame structure. The processing module is further configured to determine a target frame structure based on the one or more frame structure parameters, where the target frame structure includes a plurality of slots, each of the slots includes a plurality of symbols, and the symbol is the F symbol, a DL symbol or a UL symbol. The processing module is further configured to perform a data processing based on the target frame structure.

In one example, when receiving the FD mode enable indication information from the BS, the receiving module is specifically configured to: receive a slot format indication message from the BS, where the slot format indication message carries the FD mode enable indication information. The slot format indication message carries the FD mode enable indication information, including that: the slot format indication message carries the FD mode enable indication information if the slot format indication message includes an FD slot format combination field.

In particular, one or more combination identifiers, each of which corresponds to a combination of at least one slot format, are parsed from the FD slot format combination field if the slot format indication message includes the FD slot format combination field. The receiving module is further configured to receive a DCI message from the BS. The processing module is further configured to parse the DCI message to obtain the combination identifier corresponding to a target slot format combination, and determine the target slot format combination based on the combination identifier corresponding to the target slot format combination.

When the slot format indication message carries the FD mode enable indication information, the effective time of enabling the FD mode is determined by the processing module in the following scheme: a slot at which the DCI message is received.

In one example, the processing module is further configured to determine a target frame structure based on the target slot format combination. The target frame structure includes a plurality of slots, each of the slots includes a plurality of symbols, and the symbol is the F symbol, the DL symbol or the UL symbol. The processing module is further configured to perform the data processing based on the target frame structure.

Based on the same application concept as the methods described above, an apparatus for configuring a TDD frame structure is provided in one example of the present invention and may be applied to UE that does not support an FD mode. The apparatus may include:

a receiving module, configured to receive FD mode enable indication information from a BS, where the BS in an FD-enabled mode transmits the FD mode enable indication information to the UE; an enabling module, configured to ignore the FD mode enable indication information, where an F symbol in a slot is expected by the UE to be used as DL, UL, or a GP; and a processing module, configured to process DL data on a time-domain resource related to the F symbol when the F symbol is used as the DL, and process UL data on the time-domain resource related to the F symbol when the F symbol is used as the UL.

Based on the same application concept as the methods described above, an electronic device (such as the BS or the UE in the above examples) is provided in one example of the present invention. The electronic device includes one or more processors and one or more machine-readable storage media. The one or more machine-readable storage media store machine-executable instructions capable of being executed by the one or more processors. The one or more processors are configured to execute the machine-executable instructions to implement the methods of configuring a TDD frame structure disclosed in the above examples of the present invention.

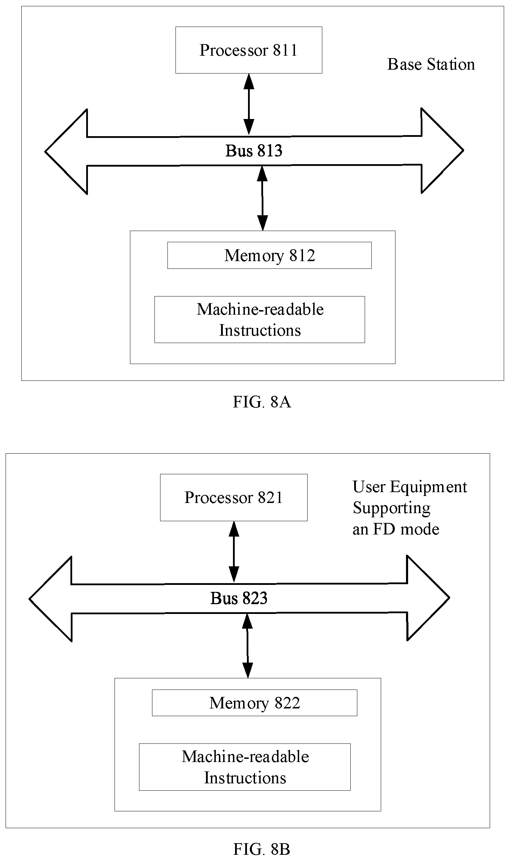

By referring to FIG. 8A, a BS is provided in one example of the present invention. The BS may include a processor 811, a memory 812, and a bus 813. The memory 812 stores machine-readable instructions executable by the processor 811. When the BS is in operation, the processor 811 communicates with the memory 812 via the bus 813. When the machine-readable instructions are executed by the processor 811, the following operations are performed:

determining an operation mode of the BS, where the operation mode is either an FD-enabled mode or an FD-disabled mode, and where an F symbol in a slot is allowed to be used as FD, DL, UL or a GP in the FD-enabled mode, and to be used as the DL, the UL or the GP in the FD-disabled mode; and transmitting, in the FD-enabled mode, FD mode enable indication information to UE for enabling an FD mode for the UE based on the FD mode enable indication information; and in the FD-enabled mode, making UL data and DL data capable of being simultaneously processed on a time-domain resource related to the F symbol in the slot when the F symbol is used as the FD .

In the operations performed by the processor 811 in one example, transmitting the FD mode enable indication information to the UE includes: transmitting a system broadcast message to the UE, where the system broadcast message carries the FD mode enable indication information; or, transmitting an RRC reconfiguration message to the UE, where the RRC reconfiguration message carries the FD mode enable indication information.

In one example, if the system broadcast message is an MIB message, the FD mode enable indication information is indicated via a spare field of the MIB message. Alternatively, the MIB message includes an FD enabled field, and the FD mode enable indication information is indicated via the FD enabled field of the MIB message.

In the operations performed by the processor 811 in one example, when the MIB message carries the FD mode enable indication information, effective time of enabling the FD mode includes: a slot next to a slot at which the MIB message is transmitted; or the M-th slot after the slot at which the MIB message is transmitted, where the M is a fixed value agreed between the BS and the UE, and the M is a positive integer; or the first slot of a frame next to a frame in which the MIB message is transmitted; or the first slot of a period next to a period in which the MIB message is transmitted.

If the system broadcast message is an SIB message, the FD mode enable indication information is indicated via a UL-DL common configuration message. Alternatively, the SIB message includes an FD enabled field, and the FD mode enable indication information is indicated via the FD enabled field of the SIB message.

In the operations performed by the processor 811 in one example, when the SIB message carries the FD mode enable indication information, the effective time of enabling the FD mode includes: a slot next to a slot at which the SIB message is transmitted; or the M-th slot after the slot at which the SIB message is transmitted, where the M is a fixed value agreed between the BS and the UE, and the M is a positive integer; or the first slot of a frame next to a frame in which the SIB message is transmitted; or the first slot of a period next to a period in which the SIB message is transmitted.

In one example, if the RRC reconfiguration message carries the FD mode enable indication information, the RRC reconfiguration message includes an FD enabled field and the FD mode enable indication information is indicated via the FD enabled field of the RRC reconfiguration message.

In the operations performed by the processor 811 in one example, when the RRC reconfiguration message carries the FD mode enable indication information, the effective time of enabling the FD mode includes: a slot next to a slot at which an RRC reconfiguration completion message corresponding to the RRC reconfiguration message is received; or the M-th slot after the slot at which the RRC reconfiguration completion message corresponding to the RRC reconfiguration message is received, where the M is a fixed value agreed between the BS and the UE, and the M is a positive integer.

In one example, when the machine-readable instructions are executed by the processor 811, the following operations are further performed: determining a target frame structure; transmitting a UL-DL common configuration message to the UE, where the UL-DL common configuration message includes one or more frame structure parameters corresponding to the target frame structure, so that the UE determines the target frame structure based on the one or more frame structure parameters; and where the target frame structure includes a plurality of slots, each of the slots includes a plurality of symbols, and the symbol is the F symbol, a DL symbol or a UL symbol; and performing a data processing based on the target frame structure.

In the operations performed by the processor 811 in one example, transmitting the FD mode enable indication information to the UE includes: transmitting a slot format indication message to the UE, where the slot format indication message carries the FD mode enable indication information.

In one example, the slot format indication message carries the FD mode enable indication information, including that: the slot format indication message carries the FD mode enable indication information if the slot format indication message includes an FD slot format combination field.

In one example, one or more combination identifiers, each of which corresponds to a combination of at least one slot format, are carried via the FD slot format combination field if the slot format indication message includes the FD slot format combination field. When the machine-readable instructions are executed by the processor 811, the following operations are further performed: determining a target slot format combination, and transmitting the combination identifier corresponding to the target slot format combination to the UE via a DCI message, so that the UE determines the target slot format combination based on the combination identifier corresponding to the target slot format combination.

In the operations performed by the processor 811, when the slot format indication message carries the FD mode enable indication information, the effective time of enabling the FD mode includes: a slot at which the DCI message is transmitted.

In one example, when the machine-readable instructions are executed by the processor 811, the following operations are further performed: determining a target frame structure based on the target slot format combination, where the target frame structure includes a plurality of slots, each of the slots includes a plurality of symbols, and the symbol is the F symbol, the DL symbol or the UL symbol; and performing the data processing based on the target frame structure.

By referring to FIG. 8B, UE that supports an FD mode is provided in one example of the present invention. The UE may include a processor 821, a memory 822, and a bus 823. The memory 822 stores machine-readable instructions executable by the processor 821. When the UE is in operation, the processor 821 communicates with the memory 822 via the bus 823. When the machine-readable instructions are executed by the processor 821, the following operations are performed:

receiving FD mode enable indication information from a BS, where the BS in an FD-enabled mode transmits the FD mode enable indication information to the UE; and enabling an FD mode for the UE based on the FD mode enable indication information, where after enabling the FD mode for the UE, an F symbol in a slot is expected by the UE to be used as FD, DL, UL, or a GP; and after enabling the FD mode for the UE, making UL data and DL data capable of being simultaneously processed on a time-domain resource related to the F symbol in the slot when the F symbol is used as the FD.

In one example, the F symbol in the slot is expected by the UE to be used as the DL, the UL, or the GP if the FD mode is not enabled for the UE. The DL data is processed on the time-domain resource related to the F symbol when the F symbol is used as the DL; and the UL data is processed on the time-domain resource related to the F symbol when the F symbol is used as the UL.

In the operations performed by the processor 821 in one example, receiving the FD mode enable indication information from the BS includes: receiving a system broadcast message from the BS, where the system broadcast message carries the FD mode enable indication information; or, receiving an RRC reconfiguration message from the BS, where the RRC reconfiguration message carries the FD mode enable indication information.

In one example, if the system broadcast message is an MIB message, the FD mode enable indication information is indicated via a spare field of the MIB message. Alternatively, the MIB message includes an FD enabled field, and the FD mode enable indication information is indicated via the FD enabled field of the MIB message.

In the operations performed by the processor 821 in one example, when the MIB message carries the FD mode enable indication information, effective time of the UE enabling the FD mode includes: a slot next to a slot at which the MIB message is received; or the M-th slot after the slot at which the MIB message is received, where the M is a fixed value agreed between the BS and the UE, and the M is a positive integer; or the first slot of a frame next to a frame in which the MIB message is received; or the first slot of a period next to a period in which the MIB message is received.

If the system broadcast message is an SIB message, the FD mode enable indication information is indicated via a UL-DL common configuration message. Alternatively, the SIB message includes an FD enabled field, and the FD mode enable indication information is indicated via the FD enabled field of the SIB message.

In the operations performed by the processor 821 in one example, when the SIB message carries the FD mode enable indication information, the effective time of the UE enabling the FD mode includes: a slot next to a slot at which the SIB message is received; or the M-th slot after the slot at which the SIB message is received, where the M is a fixed value agreed between the BS and the UE, and the M is a positive integer; or the first slot of a frame next to a frame in which the SIB message is received; or the first slot of a period next to a period in which the SIB message is received.

In one example, if the RRC reconfiguration message carries the FD mode enable indication information, the RRC reconfiguration message includes an FD enabled field and the FD mode enable indication information is indicated via the FD enabled field of the RRC reconfiguration message.

In the operations performed by the processor 821 in one example, when the RRC reconfiguration message carries the FD mode enable indication information, the effective time of the UE enabling the FD mode includes: a slot next to a slot at which an RRC reconfiguration completion message corresponding to the RRC reconfiguration message is transmitted; or the M-th slot after the slot at which the RRC reconfiguration completion message corresponding to the RRC reconfiguration message is transmitted, where the M is a fixed value agreed between the BS and the UE, and the M is a positive integer.

In one example, when the machine-readable instructions are executed by the processor 821, the following operations are further performed: receiving a UL-DL common configuration message from the BS, where the UL-DL common configuration message includes one or more frame structure parameters corresponding to a target frame structure; determining a target frame structure based on the one or more frame structure parameters, where the target frame structure includes a plurality of slots, each of the slots includes a plurality of symbols, and the symbol is the F symbol, a DL symbol or a UL symbol; and performing a data processing based on the target frame structure.

In the operations performed by the processor 821 in one example, receiving the FD mode enable indication information from the BS includes: receiving a slot format indication message from the BS, where the slot format indication message carries the FD mode enable indication information. The slot format indication message carries the FD mode enable indication information, including that: the slot format indication message carries the FD mode enable indication information if the slot format indication message includes an FD slot format combination field.

In one example, one or more combination identifiers, each of which corresponds to a combination of at least one slot format, are parsed from the FD slot format combination field if the slot format indication message includes the FD slot format combination field. When the machine-readable instructions are executed by the processor 821, the following operations are further performed: receiving a DCI message from the BS; and parsing the DCI message to obtain the combination identifier corresponding to a target slot format combination, and determining the target slot format combination based on the combination identifier corresponding to the target slot format combination.

In the operations performed by the processor 821, when the slot format indication message carries the FD mode enable indication information, the effective time of the UE enabling the FD mode includes: a slot at which the DCI message is received. In one example, when the machine-readable instructions are executed by the processor 821, the following operations are further performed: determining a target frame structure based on the target slot format combination, where the target frame structure includes a plurality of slots, each of the slots includes a plurality of symbols, and the symbol is the F symbol, the DL symbol or the UL symbol; and performing the data processing based on the target frame structure.

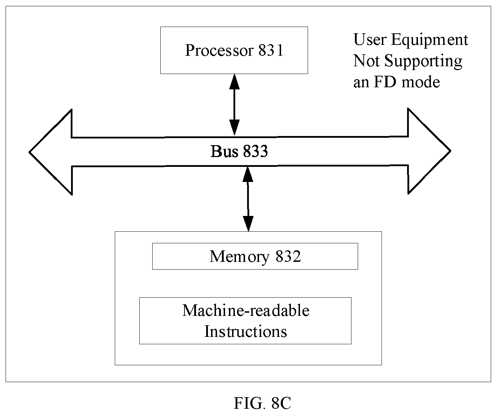

By referring to FIG. 8C, UE that does not support an FD mode is provided in one example of the present invention. The UE may include a processor 831, a memory 832, and a bus 833. The memory 832 stores machine-readable instructions executable by the processor 831. When the BS is in operation, the processor 831 communicates with the memory 832 via the bus 833. When the machine-readable instructions are executed by the processor 831, the following operations are performed:

receiving FD mode enable indication information from a BS, where the BS in an FD-enabled mode transmits the FD mode enable indication information to the UE; and

ignoring the FD mode enable indication information;

where an F symbol in a slot is expected by the UE to be used as DL, UL, or a GP; where DL data is processed on a time-domain resource related to an F symbol when the F symbol is used as the DL, and the UL data is processed on the time-domain resource related to the F symbol when the F symbol is used as the UL.

Based on the same application concept as the above methods, a machine-readable storage medium is provided in one example of the present invention and has various computer instructions stored thereon. When being executed by one or more processors, the computer instructions are capable of implementing the methods of configuring a TDD frame structure disclosed in the above examples of the present invention.

The machine-readable storage medium may be any physical storage device, e.g., electronic, magnetic, optical, or another, and may contain or store information such as executable instructions and data. For example, the machine-readable storage medium may be: a random access memory (RAM), a volatile memory, a non-volatile memory, a flash memory, a storage drive (e.g., a hard disk drive), a solid state disk, any type of storage disk (e.g., a compact disk (CD), a digital videodisk (DVD), etc.), a similar storage medium, or a combination thereof.

The systems, apparatus, modules, or units illustrated in the above examples may be implemented specifically by a computer chip or entity, or by a product having some functionality. An typical implementation device is a computer, and the specific form of the computer may be a personal computer, a laptop computer, a cellular phone, a camera phone, a smart phone, a personal digital assistant, a media player, a navigation device, an email transmitting and receiving device, a gaming console, a tablet computer, a wearable device, or a combination of any of these devices.

For convenience of description, the above apparatuses are described separately in terms of various units which are divided based on functions. Of course, the functions of the various units may be implemented in the same software and/or hardware or multiple softwares and/or hardwares when the present invention is implemented.

It should be understood by those skilled in the art that the examples of the present invention may be provided as methods, systems, or computer program products. Accordingly, the examples of the present invention may take the form of an entirely hardware, an entirely software, or a combination of software and hardware. Further, the examples of the present invention may take the form of a computer program product implemented on one or more computer-usable storage media (including, but not limited to, one or more disk memories, one or more CD-ROMs, one or more optical memories, etc.) that contain computer-usable program codes therein.

The present invention is described by reference to flowcharts and/or block diagrams of the methods, the apparatuses (systems), and the computer program products according to the examples of the present invention. It should be understood that each procedure in the flowcharts and/or each block in the block diagrams, and the combination of certain procedures in the flowcharts and/or the combination of certain blocks in the block diagrams, may be implemented by computer program instructions. These computer program instructions may be provided to one or more processors of a general computer, a specialized computer, an embedded processing device or another programmable data processing device to produce a machine, so that the instructions executed by the one or more processors of the computer or another programmable data processing device produce one or more apparatuses for implementing the functions specified by one or more procedures in the flowcharts and/or one or more blocks in the block diagrams.

In addition, these computer program instructions may also be stored in one or more computer-readable memories capable of directing a computer or another programmable data processing device to operate in a particular manner, so that the instructions stored in the one or more computer-readable memories produce one or more manufactures, each of which includes an instruction device that implements the functions specified by one or more procedures in the flowcharts and/or one or more blocks in the block diagrams.

These computer program instructions may also be loaded onto a computer or another programmable data processing device, so that a series of operational steps are performed on the computer or another programmable device to produce a computer-implemented processing. Thereby, the instructions executed on the computer or another programmable device provide steps for implementing the functions specified by one or more procedures in the flowcharts and/or one or more blocks in the block diagrams.

The foregoing is merely examples of the present invention and is not intended to limit the present invention. The present invention is subject to various changes and variations for those skilled in the art. Any modifications, equivalent substitutions, improvements, etc. made within the spirit and principle of the present invention shall be included within the scope of the claims of the present invention.

**Claims**

1. A method of configuring a time division duplex, TDD, frame structure, being applicable to a base station, BS, comprising:

   determining an operation mode of the BS, wherein the operation mode is either a full duplex enabled, FD-enabled, mode or an FD-disabled mode, and wherein a flexible, F, symbol in a slot is allowed to be used as FD, downlink, DL, uplink, UL, or a guard period, GP, in the FD-enabled mode, and to be used as the DL, the UL or the GP in the FD-disabled mode; and

transmitting, in the FD-enabled mode, FD mode enable indication information to user equipment, UE, for enabling an FD mode for the UE based on the FD mode enable indication information;

wherein in the FD-enabled mode, UL data and DL data are capable of being simultaneously processed on a time-domain resource related to the F symbol in the slot when the F symbol is used as the FD.

**2.** The method according to claim 1, wherein transmitting the FD mode enable indication information to the UE comprises:

transmitting a system broadcast message to the UE, wherein the system broadcast message carries the FD mode enable indication information; or

transmitting a radio resource control, RRC, reconfiguration message to the UE, wherein the RRC reconfiguration message carries the FD mode enable indication information.

**3.** The method according to claim 2, wherein when the system broadcast message is a master information block, MIB, message,

the FD mode enable indication information is indicated via a spare field of the MIB message, or

the MIB message comprises an FD enabled field and the FD mode enable indication information is indicated via the FD enabled field of the MIB message.

**4.** The method according to claim 3, wherein when the MIB message carries the FD mode enable indication information, effective time of enabling the FD mode comprises:

a slot next to a slot at which the MIB message is transmitted; or

an M-th slot after the slot at which the MIB message is transmitted, wherein the M is a fixed value agreed between the BS and the UE, and the M is a positive integer; or

a first slot of a frame next to a frame in which the MIB message is transmitted; or

a first slot of a period next to a period in which the MIB message is transmitted.

**5.** The method according to claim 2, wherein when the system broadcast message is a system information block, SIB, message,

the FD mode enable indication information is indicated via a UL-DL common configuration message of the SIB message, or

the SIB message comprises an FD enabled field and the FD mode enable indication information is indicated via the FD enabled field of the SIB message.

**6.** The method according to claim 5, wherein when the SIB message carries the FD mode enable indication information, effective time of enabling the FD mode comprises:

a slot next to a slot at which the SIB message is transmitted; or

an M-th slot after the slot at which the SIB message is transmitted, wherein the M is a fixed value agreed between the BS and the UE, and the M is a positive integer; or

a first slot of a frame next to a frame in which the SIB message is transmitted; or

a first slot of a period next to a period in which the SIB message is transmitted.

**7.** The method according to claim 2, wherein when the RRC reconfiguration message carries the FD mode enable indication information, the RRC reconfiguration message comprises an FD enabled field and the FD mode enable indication information is indicated via the FD enabled field of the RRC reconfiguration message.

**8.** The method according to claim 7, wherein when the RRC reconfiguration message carries the FD mode enable indication information, effective time of enabling the FD mode comprises:

a slot next to a slot at which an RRC reconfiguration completion message corresponding to the RRC reconfiguration message is received; or

an M-th slot after the slot at which the RRC reconfiguration completion message corresponding to the RRC reconfiguration message is received, wherein the M is a fixed value agreed between the BS and the UE, and the M is a positive integer.

9. The method according to any one of claims 2-8, wherein before the UL data and the DL data are capable of being simultaneously processed on the time-domain resource related to the F symbol in the slot when the F symbol is used as the FD, the method further comprises:

   determining a target frame structure, and transmitting a UL-DL common configuration message to the UE, wherein the UL-DL common configuration message comprises one or more frame structure parameters corresponding to the target frame structure, so that the UE determines the target frame structure based on the one or more frame structure parameters, and wherein the target frame structure comprises a plurality of slots, each of the slots comprises a plurality of symbols, and the symbol is the F symbol, a DL symbol or a UL symbol; and performing a data processing based on the target frame structure.

10. The method according to claim 1, wherein transmitting the FD mode enable indication information to the UE comprises:
    transmitting a slot format indication message to the UE, wherein the slot format indication message carries the FD mode enable indication information.

11. The method according to claim 10, wherein the slot format indication message carries the FD mode enable indication information, comprising that:
    the slot format indication message carries the FD mode enable indication information when the slot format indication message comprises an FD slot format combination field.

12. The method according to claim 11,

    wherein one or more combination identifiers, each of which corresponds to a combination of at least one slot format, are carried via the FD slot format combination field when the slot format indication message comprises the FD slot format combination field; and
    wherein after transmitting the slot format indication message to the UE, the method further comprises:
    determining a target slot format combination, and transmitting, via a DL control information, DCI, message, the combination identifier corresponding to the target slot format combination to the UE for determining the target slot format combination based on the combination identifier corresponding to the target slot format combination.

13. The method according to claim 12, wherein when the slot format indication message carries the FD mode enable indication information, effective time of enabling the FD mode comprises:
    a slot at which the DCI message is transmitted.

14. The method according to claim 12, wherein before the UL data and the DL data are capable of being simultaneously processed on the time-domain resource related to the F symbol in the slot when the F symbol is used as the FD, the method further comprises:

    determining a target frame structure based on the target slot format combination, wherein the target frame structure comprises a plurality of slots, each of the slots comprises a plurality of symbols, and the symbol is the F symbol, a DL symbol or a UL symbol; and
    performing a data processing based on the target frame structure.

15. A method of configuring a time division duplex, TDD, frame structure, being applicable to user equipment, UE, that supports a full duplex, FD, mode, comprising.

    receiving FD mode enable indication information from a base station, BS, wherein the BS in an FD-enabled mode transmits the FD mode enable indication information to the UE; and
    enabling an FD mode for the UE based on the FD mode enable indication information;
    wherein after enabling the FD mode for the UE, a flexible, F symbol in a slot is expected by the UE to be used as FD, downlink, DL, uplink, UL, or a guard period, GP; and
    wherein after enabling the FD mode for the UE, UL data and DL data are capable of being simultaneously processed on a time-domain resource related to the F symbol in the slot when the F symbol is used as the FD.

16. The method according to claim 15,

wherein the F symbol in the slot is expected by the UE to be used as the DL, the UL, or the GP when the FD mode is not enabled for the UE;
wherein the DL data is processed on the time-domain resource related to the F symbol in the slot when the F symbol is used as the DL; and
wherein the UL data is processed on the time-domain resource related to the F symbol in the slot when the F symbol is used as the UL.

17. The method according to claim 15, wherein receiving the FD mode enable indication information from the BS comprises:

receiving a system broadcast message from the BS, wherein the system broadcast message carries the FD mode enable indication information; or
receiving a radio resource control, RRC, reconfiguration message from the BS, wherein the RRC reconfiguration message carries the FD mode enable indication information.

18. The method according to claim 17, wherein when the system broadcast message is a master information block, MIB, message,

the FD mode enable indication information is indicated via a spare field of the MIB message, or
the MIB message comprises an FD enabled field and the FD mode enable indication information is indicated via the FD enabled field of the MIB message.

19. The method according to claim 18, wherein when the MIB message carries the FD mode enable indication information, effective time of the UE enabling the FD mode comprises:

a slot next to a slot at which the MIB message is received; or
an M-th slot after the slot at which the MIB message is received, wherein the M is a fixed value agreed between the BS and the UE, and the M is a positive integer; or
a first slot of a frame next to a frame in which the MIB message is received; or
a first slot of a period next to a period in which the MIB message is received.

20. The method according to claim 17, wherein when the system broadcast message is a system information block, SIB, message,

the FD mode enable indication information is indicated via a UL-DL common configuration message of the SIB message, or
the SIB message comprises an FD enabled field and the FD mode enable indication information is indicated via the FD enabled field of the SIB message.

21. The method according to claim 20, wherein when the SIB message carries the FD mode enable indication information, effective time of the UE enabling the FD mode comprises:

a slot next to a slot at which the SIB message is received; or
an M-th slot after the slot at which the SIB message is received, wherein the M is a fixed value agreed between the BS and the UE, and the M is a positive integer; or
a first slot of a frame next to a frame in which the SIB message is received; or
a first slot of a period next to a period in which the SIB message is received.

22. The method according to claim 17, wherein when the RRC reconfiguration message carries the FD mode enable indication information, the RRC reconfiguration message comprises an FD enabled field and the FD mode enable indication information is indicated via the FD enabled field of the RRC reconfiguration message.

23. The method according to claim 22, wherein when the RRC reconfiguration message carries the FD mode enable indication information, effective time of the UE enabling the FD mode comprises:

a slot next to a slot at which an RRC reconfiguration completion message corresponding to the RRC reconfiguration message is transmitted; or

an M-th slot after the slot at which the RRC reconfiguration completion message corresponding to the RRC reconfiguration message is transmitted, wherein the M is a fixed value agreed between the BS and the UE, and the M is a positive integer.

24. The method according to any one of claims 17 - 23, wherein before the UL data and the DL data are capable of being simultaneously processed on the time-domain resource related to the F symbol in the slot when the F symbol is used as the FD, the method further comprises:

receiving a UL-DL common configuration message from the BS, wherein the UL-DL common configuration message comprises one or more frame structure parameters corresponding to a target frame structure; determining a target frame structure based on the one or more frame structure parameters, wherein the target frame structure comprises a plurality of slots, each of the slots comprises a plurality of symbols, and the symbol is the F symbol, a DL symbol or a UL symbol; and performing a data processing based on the target frame structure.

25. The method according to claim 15, wherein receiving the FD mode enable indication information from the BS comprises:
receiving a slot format indication message from the BS, wherein the slot format indication message carries the FD mode enable indication information.

26. The method according to claim 25, wherein the slot format indication message carries the FD mode enable indication information, comprising that:
the slot format indication message carries the FD mode enable indication information when the slot format indication message comprises an FD slot format combination field.

27. The method according to claim 26,

wherein one or more combination identifiers, each of which corresponds to a combination of at least one slot format, are parsed from the FD slot format combination field when the slot format indication message comprises the FD slot format combination field; and
wherein after receiving the slot format indication message from the BS, the method further comprises:

receiving a DL control information, DCI, message from the BS; and
parsing the DCI message to obtain the combination identifier corresponding to a target slot format combination, and determining the target slot format combination based on the combination identifier corresponding to the target slot format combination.

28. The method according to claim 27, wherein when the slot format indication message carries the FD mode enable indication information, effective time of the UE enabling the FD mode comprises:
a slot at which the DCI message is received.

29. The method according to claim 27, wherein before the UL data and the DL data are capable of being simultaneously processed on the time-domain resource related to the F symbol in the slot when the F symbol is used as the FD, the method further comprises:

determining a target frame structure based on the target slot format combination, wherein the target frame structure comprises a plurality of slots, each of the slots comprises a plurality of symbols, and the symbol is the F symbol, a DL symbol or a UL symbol; and
performing a data processing based on the target frame structure.

30. A method of configuring a time division duplex, TDD, frame structure, being applicable to user equipment, UE, that does not support a full duplex, FD, mode, comprising.

receiving FD mode enable indication information from a base station, BS, wherein the BS in an FD-enabled mode transmits the FD mode enable indication information to the UE; and
ignoring the FD mode enable indication information;
wherein a flexible, F, symbol in a slot is expected by the UE to be used as downlink, DL, uplink, UL, or a guard period, GP;

wherein DL data is processed on a time-domain resource related to the F symbol in the slot when the F symbol is used as the DL; and

wherein UL data is processed on the time-domain resource related to the F symbol in the slot when the F symbol is used as the UL.

31. An apparatus for configuring a time division duplex, TDD, frame structure, being applicable to a base station, BS, comprising:

a determining module, configured to determine an operation mode of the BS, wherein the operation mode is either a full duplex enabled, FD-enabled mode or an FD-disabled mode, and wherein a flexible, F, symbol in a slot is allowed to be used as FD, downlink, DL, uplink, UL, or a guard period, GP, in the FD-enabled mode, and to be used as the DL, the UL or the GP in the FD-disabled mode;

a transmitting module, configured to in the FD-enabled mode, transmit FD mode enable indication information to user equipment, UE, for enabling an FD mode for the UE based on the FD mode enable indication information; and

a processing module, configured to be capable of processing UL data and DL data simultaneously on a time-domain resource related to the F symbol in the slot when the F symbol is used as the FD in the FD-enabled mode.

32. The apparatus according to claim 31, wherein when transmitting the FD mode enable indication information to the UE, the transmitting module is configured to:

transmit a system broadcast message to the UE, wherein the system broadcast message carries the FD mode enable indication information; or

transmit a radio resource control, RRC, reconfiguration message to the UE, wherein the RRC reconfiguration message carries the FD mode enable indication information.

33. The apparatus according to claim 32,

wherein when the system broadcast message is a master information block, MIB, message,

the FD mode enable indication information is indicated via a spare field of the MIB message, or
the MIB message comprises an FD enabled field and the FD mode enable indication information is indicated via the FD enabled field of the MIB message; and

wherein when the MIB message carries the FD mode enable indication information, effective time of enabling the FD mode is determined by the processing module as:

a slot next to a slot at which the MIB message is transmitted; or
an M-th slot after the slot at which the MIB message is transmitted, wherein the M is a fixed value agreed between the BS and the UE, and the M is a positive integer; or
a first slot of a frame next to a frame in which the MIB message is transmitted; or
a first slot of a period next to a period in which the MIB message is transmitted.

34. The apparatus according to claim 32,

wherein when the system broadcast message is a system information block, SIB, message,

the FD mode enable indication information is indicated via a UL-DL common configuration message of the SIB message, or
the SIB message comprises an FD enabled field and the FD mode enable indication information is indicated via the FD enabled field of the SIB message; and

wherein when the SIB message carries the FD mode enable indication information, effective time of enabling the FD mode is determined by the processing module as:

a slot next to a slot at which the SIB message is transmitted; or
an M-th slot after the slot at which the SIB message is transmitted, wherein the M is a fixed value agreed between the BS and the UE, and the M is a positive integer; or
a first slot of a frame next to a frame in which the SIB message is transmitted; or
a first slot of a period next to a period in which the SIB message is transmitted.

**35.** The apparatus according to claim 32,

wherein when the RRC reconfiguration message carries the FD mode enable indication information, the RRC reconfiguration message comprises an FD enabled field and the FD mode enable indication information is indicated via the FD enabled field of the RRC reconfiguration message; and
wherein when the RRC reconfiguration message carries the FD mode enable indication information, effective time of enabling the FD mode is determined by the processing module as:

a slot next to a slot at which an RRC reconfiguration completion message corresponding to the RRC reconfiguration message is received; or
an M-th slot after the slot at which the RRC reconfiguration completion message corresponding to the RRC reconfiguration message is received, wherein the M is a fixed value agreed between the BS and the UE, and the M is a positive integer.

**36.** The apparatus according to any one of claims 32 - 35, wherein

the determining module is further configured to determine a target frame structure;
the transmitting module is further configured to transmit a UL-DL common configuration message to the UE, wherein the UL-DL common configuration message comprises one or more frame structure parameters corresponding to the target frame structure, so that the UE determines the target frame structure based on the one or more frame structure parameters, and wherein the target frame structure comprises a plurality of slots, each of the slots comprises a plurality of symbols, and the symbol is the F symbol, a DL symbol or a UL symbol; and
the processing module is further configured to perform a data processing based on the target frame structure.

**37.** The apparatus according to claim 31, wherein when transmitting the FD mode enable indication information to the UE, the transmitting module is configured to transmit a slot format indication message to the UE, wherein the slot format indication message carries the FD mode enable indication information.

**38.** The apparatus according to claim 37,

wherein the slot format indication message carries the FD mode enable indication information, comprising that:
the slot format indication message carries the FD mode enable indication information when the slot format indication message comprises an FD slot format combination field;
wherein one or more combination identifiers, each of which corresponds to a combination of at least one slot format, are carried via the FD slot format combination field when the slot format indication message comprises the FD slot format combination field,
wherein the determining module is further configured to determine a target slot format combination, and the transmitting module is further configured to transmit, via a DL control information, DCI, message, the combination identifier corresponding to the target slot format combination to the UE for determining the target slot format combination based on the combination identifier corresponding to the target slot format combination; and
wherein when the slot format indication message carries the FD mode enable indication information, effective time of enabling the FD mode is determined by the processing module as:
a slot at which the DCI message is transmitted.

**39.** The apparatus according to claim 38,

wherein the determining module is further configured to determine a target frame structure based on the target slot format combination, wherein the target frame structure comprises a plurality of slots, each of the slots comprises a plurality of symbols, and the symbol is the F symbol, a DL symbol or a UL symbol; and
wherein the processing module is further configured to perform a data processing based on the target frame structure.

**40.** An apparatus for configuring a time division duplex, TDD, frame structure, being applicable to user equipment, UE, that supports a full duplex, FD, mode, comprising.

a receiving module, configured to receive FD mode enable indication information from a base station, BS, wherein the BS in an FD-enabled mode transmits the FD mode enable indication information to the UE;

an enabling module, configured to enable an FD mode for the UE based on the FD mode enable indication information, wherein after enabling the FD mode for the UE, a flexible, F, symbol in a slot is expected by the UE to be used as FD, downlink, DL, uplink, UL, or a guard period, GP; and

a processing module, configured to be capable of processing UL data and DL data simultaneously on a time-domain resource related to the F symbol in the slot when the F symbol is used as the FD after the FD mode is enabled for the UE.

41. The apparatus according to claim 40, wherein when receiving the FD mode enable indication information from the BS, the receiving module is configured to:

receive a system broadcast message from the BS, wherein the system broadcast message carries the FD mode enable indication information; or

receive a radio resource control, RRC, reconfiguration message from the BS, wherein the RRC reconfiguration message carries the FD mode enable indication information.

42. The apparatus according to claim 41,

wherein when the system broadcast message is a master information block, MIB, message,

the FD mode enable indication information is indicated via a spare field of the MIB message, or
the MIB message comprises an FD enabled field and the FD mode enable indication information is indicated via the FD enabled field of the MIB message; and

wherein when the MIB message carries the FD mode enable indication information, effective time of enabling the FD mode is determined by the processing module as:

a slot next to a slot at which the MIB message is received; or
an M-th slot after the slot at which the MIB message is received, wherein the M is a fixed value agreed between the BS and the UE, and the M is a positive integer; or
a first slot of a frame next to a frame in which the MIB message is received; or
a first slot of a period next to a period in which the MIB message is received.

43. The apparatus according to claim 41,

wherein when the system broadcast message is a system information block, SIB, message,

the FD mode enable indication information is indicated via a UL-DL common configuration message of the SIB message, or
the SIB message comprises an FD enabled field and the FD mode enable indication information is indicated via the FD enabled field of the SIB message; and

wherein when the SIB message carries the FD mode enable indication information, effective time of enabling the FD mode is determined by the processing module as:

a slot next to a slot at which the SIB message is received; or
an M-th slot after the slot at which the SIB message is received, wherein the M is a fixed value agreed between the BS and the UE, and the M is a positive integer; or
a first slot of a frame next to a frame in which the SIB message is received; or
a first slot of a period next to a period in which the SIB message is received.

44. The apparatus according to claim 41,

wherein when the RRC reconfiguration message carries the FD mode enable indication information, the RRC reconfiguration message comprises an FD enabled field and the FD mode enable indication information is indicated via the FD enabled field of the RRC reconfiguration message; and

wherein when the RRC reconfiguration message carries the FD mode enable indication information, effective time of enabling the FD mode is determined by the processing module as:

> a slot next to a slot at which an RRC reconfiguration completion message corresponding to the RRC reconfiguration message is transmitted; or
> an M-th slot after the slot at which the RRC reconfiguration completion message corresponding to the RRC reconfiguration message is transmitted, wherein the M is a fixed value agreed between the BS and the UE, and the M is a positive integer.

**45.** The apparatus according to claim 41 - 44, wherein

> the receiving module is further configured to receive a UL-DL common configuration message from the BS, wherein the UL-DL common configuration message comprises one or more frame structure parameters corresponding to a target frame structure; and
> the processing module is further configured to determine a target frame structure based on the one or more frame structure parameters, wherein the target frame structure comprises a plurality of slots, each of the slots comprises a plurality of symbols, and the symbol is the F symbol, a DL symbol or a UL symbol; and perform a data processing based on the target frame structure.

**46.** The apparatus according to claim 40, wherein when receiving the FD mode enable indication information from the BS, the receiving module is configured to receive a slot format indication message from the BS, wherein the slot format indication message carries the FD mode enable indication information.

**47.** The apparatus according to claim 46,

> wherein the slot format indication message carries the FD mode enable indication information, comprising that: the slot format indication message carries the FD mode enable indication information when the slot format indication message comprises an FD slot format combination field;
> wherein one or more combination identifier, each of which corresponds to a combination of at least one slot format, are parsed from the FD slot format combination field when the slot format indication message comprises the FD slot format combination field,
> wherein the receiving module is further configured to receive a DL control information, DCI, message from the BS, and the processing module is further configured to parse the DCI message to obtain the combination identifier corresponding to a target slot format combination, and determine the target slot format combination based on the combination identifier corresponding to the target slot format combination; and
> wherein when the slot format indication message carries the FD mode enable indication information, effective time of enabling the FD mode is determined by the processing module as:
> a slot at which the DCI message is received.

**48.** The apparatus according to claim 47, wherein the processing module is further configured to:

> determine a target frame structure based on the target slot format combination, wherein the target frame structure comprises a plurality of slots, each of the slots comprises a plurality of symbols, and the symbol is the F symbol, a DL symbol or a UL symbol; and
> perform a data processing based on the target frame structure.

**49.** An apparatus for configuring a time division duplex, TDD, frame structure, being applicable to user equipment, UE, that does not support a full duplex, FD, mode, comprising.

> a receiving module, configured to receive FD mode enable indication information from a base station, BS, wherein the BS in an FD-enabled mode transmits the FD mode enable indication information to the UE;
> an enabling module, configured to ignore the FD mode enable indication information, wherein a flexible, F, symbol in a slot is expected by the UE to be used as downlink, DL, uplink, UL, or a guard period, GP; and
> a processing module, configured to process DL data on a time-domain resource related to the F symbol in the slot when the F symbol is used as the DL, and process UL data on the time-domain resource related to the F symbol in the slot when the F symbol is used as the UL.

**50.** An electronic device, comprising:

one or more processors, and
one or more machine-readable storage media, wherein the one or more machine-readable storage media store machine-executable instructions capable of being executed by the one or more processors, wherein the one or more processors are configured to execute the machine-executable instructions to implement the steps of the method according to any one of claims 1 - 14, or to implement the steps of the method according to any one of claims 15 - 29, or to implement the steps of the method according to claim 30.

| Slot | 0 | | | | | | | | | | | | | | 1 | | | | | | | | | | | | | | 2 | | | | | | | | | | | | | | 3 | | | | | | | | | | | | | | 4 | | | | | | | | | | | | | |
|------|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| Symbol | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |
| Uplink/ Downlink | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | DL | GP | GP | UL | UL | UL | UL | UL | UL | UL | UL | UL | UL | UL | UL | UL | UL | UL | UL | UL | UL |

FIG. 1

Determine an operation mode of the BS, where the operation mode is either an FD-enabled mode or an FD-disabled mode, and an F symbol in a slot is allowed to be used as FD, DL, UL or a GP in the FD-enabled mode, and to be used as the DL, the UL or the GP in the FD-disabled mode

— 201

In the FD-enabled mode, transmit FD mode enable indication information to UE for enabling an FD mode for the UE based on the FD mode enable indication information

— 202

In the FD-enabled mode, UL data and DL data are capable of being simultaneously processed on a time-domain resource related to the F symbol in the slot when the F symbol is used as the FD

— 203

FIG. 2

Receive FD mode enable indication information from a BS, where the BS in the FD-enabled mode transmits the FD mode enable indication information to the UE

— 301

Enable an FD mode for the UE based on the FD mode enable indication information

— 302

After the FD mode is enabled for the UE, the UL data and the DL data are capable of being simultaneously processed on the time-domain resource related to the F symbol in the slot when the F symbol is used as the FD

— 303

FIG. 3

Receive FD mode enable indication information from a BS, where the BS in the FD-enabled mode transmits the FD mode enable indication information to the UE

— 401

Ignore the FD mode enable indication information

— 402

FIG. 4

Scheme 1　　Scheme 2

Scheme 3

Scheme 4

| Frame | N | | | | | | | | | | | | | | | | | | | |
|---|---|---|---|---|---|---|---|---|---|---|---|---|---|---|---|---|---|---|---|---|
| Slot | 0 | 1 | 2 | 3 | 4 | 5 | 6 | 7 | 8 | 9 | 10 | 11 | 12 | 13 | 14 | 15 | 16 | 17 | 18 | 19 |
| Frame | N+1 | | | | | | | | | | | | | | | | | | | |
| Slot | 0 | 1 | 2 | 3 | 4 | 5 | 6 | 7 | 8 | 9 | 10 | 11 | 12 | 13 | 14 | 15 | 16 | 17 | 18 | 19 |
| | ...... | | | | | | | | | | | | | | | | | | | |
| Frame | N+8 | | | | | | | | | | | | | | | | | | | |
| Slot | 0 | 1 | 2 | 3 | 4 | 5 | 6 | 7 | 8 | 9 | 10 | 11 | 12 | 13 | 14 | 15 | 16 | 17 | 18 | 19 |

FIG. 5

| Slot | | | | | | | | | | | | | |
|---|---|---|---|---|---|---|---|---|---|---|---|---|---|
| 0 | 1 | 2 | 3 | 4 | 5 | 6 | 7 | 8 | 9 | 10 | 11 | 12 | 13 |
| DL | DL | DL | DL | DL | F | F | F | F | UL | UL | UL | UL | UL |

Frequency Domain

FD

FD

Time Domain

FIG. 6

| Slot 0 | | | | | | | | | | | | | | Slot 1 | | | | | | | | | | | | | | Slot 2 | | | | | | | | | | | | | | Slot 3 | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |
| D | D | D | D | D | D | D | D | D | D | D | D | D | D | D | D | D | D | D | D | D | D | D | D | D | D | D | D | F | F | F | F | F | F | F | F | F | F | F | F | F | F | U | U | U | U | U | U | U | U | U | U | U | U | U | U |

FIG. 7

Processor 811

Base Station

Bus 813

Memory 812

Machine-readable
Instructions

FIG. 8A

Processor 821

User Equipment
Supporting
an FD mode

Bus 823

Memory 822

Machine-readable
Instructions

FIG. 8B

Processor 831

User Equipment
Not Supporting
an FD mode

Bus 833

Memory 832

Machine-readable
Instructions

FIG. 8C

## INTERNATIONAL SEARCH REPORT

| | International application No. |
|---|---|
| | **PCT/CN2022/090611** |

**A.  CLASSIFICATION OF SUBJECT MATTER**

H04W 72/04(2009.01)i;  H04L 5/00(2006.01)i

According to International Patent Classification (IPC) or to both national classification and IPC

**B.  FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT, VEN, ENTXTC, ENTXT, OETXT, CNKI, 3GPP, IEEE: 时分双工, 帧结构, 灵活, 符号, 全双工, 时隙, 上行, 下行, 保护周期, 同时, 子带, TDD, frame structure, flexible, symbol, full duplex, FD, slot, uplink, UL, downlink, DL, guard period, GP, simultaneous, sub-band

**C.  DOCUMENTS CONSIDERED TO BE RELEVANT**

| Category* | Citation of document, with indication, where appropriate, of the relevant passages | Relevant to claim No. |
|---|---|---|
| X | US 2021400637 A1 (QUALCOMM INC.) 23 December 2021 (2021-12-23) description, paragraphs 5-204 | 1-50 |
| A | CN 111988848 A (HUAWEI TECHNOLOGIES CO., LTD.) 24 November 2020 (2020-11-24) entire document | 1-50 |
| A | US 2021168807 A1 (ELECTRONICS AND TELECOMMUNICATIONS RESEARCH INSTITUTE) 03 June 2021 (2021-06-03) entire document | 1-50 |
| A | US 2022046722 A1 (LG ELECTRONICS INC.) 10 February 2022 (2022-02-10) entire document | 1-50 |
| A | WO 2020064176 A1 (FRAUNHOFER GES FORSCHUNG) 02 April 2020 (2020-04-02) entire document | 1-50 |
| A | WO 2022005997 A1 (QUALCOMM INC.) 06 January 2022 (2022-01-06) entire document | 1-50 |
| A | ZTE et al. "Evolution of Duplex Operation" *3GPP TSG RAN Meeting #93-e RP-212382*, 06 September 2021 (2021-09-06), entire document | 1-50 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 December 2022** | **20 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/090611** |

| Patent document cited in search report | | | Publication date (day/month/year) | Patent family member(s) | | | Publication date (day/month/year) |
| --- | --- | --- | --- | --- | --- | --- | --- |
| US | 2021400637 | A1 | 23 December 2021 | WO | 2021257201 | A1 | 23 December 2021 |
| CN | 111988848 | A | 24 November 2020 | WO | 2020233420 | A1 | 26 November 2020 |
|    |            |   |                  | EP | 3965502 | A1 | 09 March 2022 |
|    |            |   |                  | US | 2022086832 | A1 | 17 March 2022 |
|    |            |   |                  | EP | 3965502 | A4 | 29 June 2022 |
| US | 2021168807 | A1 | 03 June 2021 | WO | 2019035584 | A1 | 21 February 2019 |
|    |            |   |              | CN | 110999190 | A | 10 April 2020 |
|    |            |   |              | KR | 20190018390 | A | 22 February 2019 |
|    |            |   |              | US | 11375511 | B2 | 28 June 2022 |
| US | 2022046722 | A1 | 10 February 2022 | WO | 2020145460 | A1 | 16 July 2020 |
| WO | 2020064176 | A1 | 02 April 2020 | EP | 3857776 | A1 | 04 August 2021 |
| WO | 2022005997 | A1 | 06 January 2022 | | None | | |

Form PCT/ISA/210 (patent family annex) (January 2015)